(19) Europäisches Patentamt
European Patent Office
Office européen des brevets

(11) Veröffentlichungsnummer: **0 304 924**
**A2**

# (12) EUROPÄISCHE PATENTANMELDUNG

(21) Anmeldenummer: **88113886.1**

(22) Anmeldetag: **25.08.88**

(51) Int. Cl.4: **C09B 62/20 , C09B 62/503 , D06P 1/38**

(30) Priorität: **27.08.87 CH 3288/87**

(43) Veröffentlichungstag der Anmeldung: **01.03.89 Patentblatt 89/09**

(84) Benannte Vertragsstaaten: **CH DE FR GB LI**

(71) Anmelder: **CIBA-GEIGY AG**
**Klybeckstrasse 141**
**CH-4002 Basel(CH)**

(72) Erfinder: **Hoegerle, Karl, Dr.**
**Conrad Ferdinand Meyer-Strasse 54**
**CH-4059 Basel(CH)**

(74) Vertreter: **Patentanwälte TER MEER - MÜLLER - STEINMEISTER**
**Mauerkircherstrasse 45**
**D-8000 München 80(DE)**

(54) **Reaktivfarbstoffe, deren Herstellung und Verwendung.**

(57) Reaktivfarbstoffe der Formel

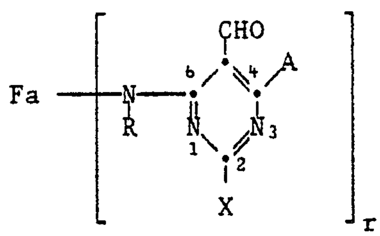

(1),

worin Fa, R, A, X und r die im Anspruch 1 angegebene Bedeutung haben, eignen sich besonders zum Färben und Bedrucken von cellulosehaltigen Fasermaterialien nach dem Kaltverweilverfahren und geben, bei hoher färberischer Ausbeute, Färbungen und Drucke mit guten Echtheitseigenschaften.

EP 0 304 924 A2

## Reaktivfarbstoffe, deren Herstellung und Verwendung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollten ferner eine hohe Reaktivität besitzen, so dass nur kurze Verweilzeiten erforderlich sich, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe gelöst wird.

Gegenstand der Erfindung sind Reaktivfarbstoffe der Formel

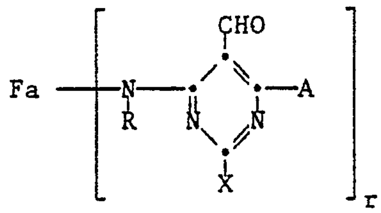
(1),

worin Fa der Rest eines organischen Farbstoffes der Monoazo- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon-oder Perylentetracarbimid-Reihe ist,

X ein abspaltbarer Substituent ist,

r die Zahl 1 oder 2 bedeutet,

R für Wasserstoff oder gegebenenfalls durch nichtreaktive Reste substituiertes $C_1$-$C_4$-Alkyl steht, und

A ein Rest der Formel

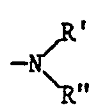
(2) ist,

worin R′ Wasserstoff, unsubstituiertes oder durch einen oder mehrere nichtreaktive Reste substituiertes $C_1$-$C_4$-Alkyl, $C_5$-$C_6$-Cycloalkyl, unsubstituiertes oder durch einen oder mehrere nichtreaktive Reste substituiertes Aryl oder einen Reaktivrest der Formel

$$-\overset{R_1}{\overset{|}{alk}}-SO_2-Z \quad (3),$$

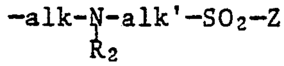 (3a),

$-arylen-SO_2-Z$ (3b) oder

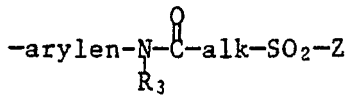 (3c)

bedeutet; alk und alk′ unabhängig voneinander einen $C_1$-$C_6$-Alkylenrest darstellen, arylen ein gegebenenfalls substituierter Arylenrest ist, $R_1$ für Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder für die Gruppe $-SO_2-Z$ steht, $R_2$ Wasserstoff oder $C_1$-$C_4$-Alkyl ist, $R_3$ Wasserstoff oder unsubstituiertes oder durch Hydroxy, Sulfo, Sulfato, Carboxy oder Cyano substituiertes $C_1$-$C_4$-Alkyl bedeutet, Z für $-CH=CH_2$ oder $-CH_2-CH_2-Y$ steht und Y eine Abgangsgruppe ist;
R″ unabhängig die Bedeutung von R hat oder einen Reaktivrest der oben angegebenen Formel (3) darstellt; oder R′ und R″ zusammen mit dem N-Atom einen Rest der Formel

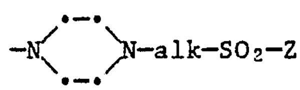 (2a),

worin alk und Z die oben angegebene Bedeutung haben, bilden.

Der Rest Fa in Formel (1) kann an seinem Grundgerüst die bei organischen Farbstoffen üblichen Substituenten gebunden enthalten.

Beispiele für geeignete Substituenten im Rest Fa sind: $C_1$-$C_4$-Alkyl, womit generell Methyl, Ethyl, n- oder iso-Propyl oder n-, sec.- oder tert.-Butyl umfasst ist; $C_1$-$C_4$-Alkoxy, worunter generell Methoxy, Ethoxy, n- oder iso-Propoxy oder n-, sec.- oder tert.-Butoxy zu verstehen ist; $C_1$-$C_4$-Alkanoylamino, besonders Acetylamino oder Propionylamino; Benzoylamino; Amino; N-Mono- oder N,N-Di-$C_1$-$C_4$-Alkylamino, wobei das Alkyl z.B. durch -OH, $-OCOCH_3$, $-OSO_3H$, -CN oder Halogen weitersubstituiert sein kann, z.B. Methylamino, Ethylamino, n- oder iso-Propylamino, n-, sec.- oder tert.- Butylamino, N,N-Di-β-hydroxyethylamino, N,N-Di-β-sulfatoethylamino, Hydroxypropylamino, β-Sulfatoethylamino, β-Chlorethylamino, β-Acetyloxyethylamino; Phenylamino; Mono- oder Di-Sulfobenzylamino; $C_1$-$C_4$-Alkoxycarbonyl, z.B. Methoxy- oder Ethoxycarbonyl; $C_1$-$C_4$-Alkylsulfonyl, z.B. Methyl- oder Ethylsulfonyl; Trifluormethyl; Nitro; Cyano; Halogen, worunter generell Fluor, Chlor und Brom zu verstehen ist; Carbamoyl; N-Mono- oder N,N-Di-$C_1$-$C_4$-Alkylcarbamoyl; Sulfamoyl; N-Mono- oder N,N-Di-$C_1$-$C_4$-Alkylsulfamoyl; N-(β-hydroxyethyl)-sulfamoyl; N,N-Di-(β-hydroxyethyl)-sulfamoyl; N-Phenylsulfamoyl; Hydroxy; Carboxy; Sulfo; Sulfomethyl; Ureido.

Fa bedeutet vorzugsweise den Rest eines organischen Farbstoffes der Mono-oder Polyazo-, Metallkomplexazo, Anthrachinon-, Phthalocyanin-, Formazan- oder Dioxazinreihe, welcher durch einen oder mehrere der oben genannten Reste substituiert ist.

Besonders bevorzugt enthält der Rest Fa eine oder mehrere Sulfogruppen und kann darüberhinaus durch einen oder mehrere der obengenannten Reste weitersubstituiert sein.

Handelt es sich bei Fa um den Rest eines Mono- oder Disazofarbstoffes, so ist dieser besonders bevorzugt durch einen oder mehrere Reste, ausgewählt aus der Gruppe Methyl, Ethyl, Methoxy, Ethoxy, Acetylamino, Benzoylamino, Amino, Chlor, Brom, Ureido, Hydroxy, Carboxy, Sulfomethyl und Sulfo, substituiert.

Bedeutet R einen substituierten $C_1$-$C_4$-Alkylrest, so kann dies z.B. ein durch Halogen, Hydroxy, Cyano, Carboxy, Sulfo, Sulfato, $C_1$-$C_4$-Alkoxycarbonyl, $C_1$-$C_4$-Alkoxy oder Phenyl substituierter $C_1$-$C_4$-Alkylrest sein.

Beispiele für substituierte $C_1$-$C_4$-Alkylrest sind: Carboxymethyl, β-Carboxyethyl, Methoxycarbonylmethyl, Ethoxycarbonylmethyl, β-Methoxyethyl, β-Ethoxyethyl, β-Chlorethyl, γ-Brompropyl, γ-Chlorpropyl, β-Hydroxyethyl, β-Hydroxybutyl, β-Cyanethyl, Sulfomethyl, β-Sulfoethyl, β-Sulfatoethyl.

R steht bevorzugt für Methyl oder Ethyl und insbesondere für Wasserstoff.

Der abspaltbare Substituent X ist z.B. ein Halogenatom wie Fluor, Chlor oder Brom, eine $C_1$-$C_4$-Alkylsulfonylgruppe wie Methyl-oder Ethylsulfonyl, der Phenylsulfonlyrest, eine Sulfonsäure oder Phosphonsäuregruppe oder eine quaternisierte Ammoniumgruppe.

Vorzugsweise handelt es sich bei dem abspaltbaren Substituenten X um Fluor oder Chlor.

Der in eckige Klammern eingeschlossene Teil von Formel (1) ist ein Reaktivrest, welcher ein- oder zweimal im Molekül vorhanden sein kann; falls r = 2 ist, können die beiden Reaktivreste gleich oder verschieden sein; vorzugsweise sind beide Reste gleich.

Besonders bevorzugt sind Reaktivfarbstoffe der Formel (1), worin r = 1 ist.

Steht R′ in der Formel (2) für einen substituierten $C_1$-$C_4$-Alkylrest, so gelten hierbei unabhängig die zuvor für R angegebenen Bedeutungen und Bevorzugungen.

Bedeutet R′ einen Cycloalkylrest, handelt es sich z.B. um den Cyclohexylrest.

Bei R′ in der Bedeutung eines Arylrestes handelt es sich z.B. um einen Naphthyl- und bevorzugt um einen Phenylrest; das Phenyl und Naphthyl kann hierbei unsubstituiert oder z.B. durch $C_1$-$C_4$-Alkyl, $C_1$-$C_4$-Alkoxy, Carboxy, Sulfo und/oder Halogen substituiert sein.

Beispiele für geeignete Arylreste R′ sind Phenyl, o-, m- oder p-Methylphenyl, o-, m- oder p-Methoxyphenyl, o-, m- oder p-Chlorphenyl, o-, m-oder p-Sulfophenyl, o- Carboxyphenyl, 2,4- oder 2,5-Disulfophenyl, 1-oder 2-Naphthyl, 1-Sulfo-2-naphthyl oder 4,8-Disulfo-2-naphthyl.

R′ steht als Arylrest bevorzugt für unsubstituiertes oder durch Chlor, Methyl, Ethyl, Methoxy, Ethoxy, Carboxy und/oder Sulfo substituiertes Phenyl; besonders bevorzugt sind hierbei die Bedeutungen Sulfophenyl und Disulfophenyl.

Bedeutet R′ einen Rest der zuvor angegebenen Formeln (3), (3a), (3b) oder (3c), stehen darin alk und alk′ unabhängig voneinander z.B. für Methylen, Ethylen, 1,3-Propylen, 1,4-Butylen, 1,5-Pentylen oder 1,6-Hexylen oder deren verzweigte Isomere.

alk und alk′ bedeuten unabhängig voneinander bevorzugt einen $C_1$-$C_4$-Alkylenrest und insbesondere bevorzugt je einen Ethylenrest.

arylen steht z.B. für einen Phenylen- oder Naphthylenrest, der jeweils unsubstituiert oder z.B. durch Sulfo, Carboxy, $C_1$-$C_4$-Alkyl, $C_1$-$C_4$-Alkoxy und/oder Halogen substituiert ist.

Vorzugsweise bedeutet arylen einen 1,3- oder 1,4-Phenylenrest, der unsubstituiert oder z.B. durch Sulfo, Methyl, Methoxy oder Carboxy substituiert ist.

$R_1$ ist vorzugsweise Wasserstoff oder die Gruppe $-SO_2-Z$, worin Z die zuvor angegebene Bedeutung hat. Besonders bevorzugt steht R für Wasserstoff.

$R_2$ steht vorzugsweise für Wasserstoff.

$R_3$ bedeutet vorzugsweise Wasserstoff oder $C_1$-$C_4$-Alkyl.

Geeignete Abgangsgruppen Y sind z.B., -Cl, -Br, -F, $-OSO_3H$, $-SSO_3H$, $-OCO-CH_3$, $-OCO-C_6H_5$, $-OPO_3H_2$, $-OCO-CCl_3$, $-OCO-CHCl_2$, $-OCO-CH_2Cl$, $OSO_2-R_4$, worin $R_4$ $C_1$-$C_4$-Alkyl oder gegebenenfalls durch $C_1$-$C_4$-Alkyl substituiertes Phenyl bedeutet, oder $-OSO_2-N(C_1\text{-}C_4\text{-Alkyl})_2$.

Vorzugsweise ist Y eine Gruppe -Cl, $-OSO_3H$, $-SSO_3H$, $-OCOCH_3$, $-OCO-C_6H_5$ oder $-OPO_3H_2$.

Handelt es sich bei R′ um einen Reaktivrest, so entspricht dieser vorzugweise der Formel

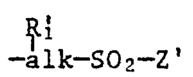

(3′),

$$-alk-NH-alk'-SO_2-Z' \qquad (3a'),$$

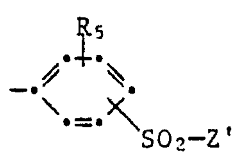

(3b′)

oder

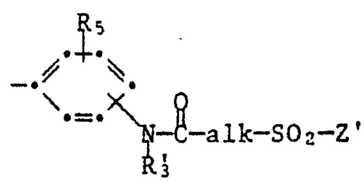

(3c′),

worin alk und alk′ unabhängig voneinander einen $C_1$-$C_4$-Alkylenrest bedeuten, $R_1'$ Wasserstoff oder die Gruppe $-SO_2-Z'$ ist, Z′ $-CH=CH_2$ oder $-CH_2-CH_2-Y'$ bedeutet, Y′ -Cl, $-OSO_3H$, $-SSO_3H$, $-OCOCH_3$, $-O-CO-C_6H_5$ oder $-OPO_3H_2$ ist, $R_5$ für Wasserstoff, Sulfo, Carboxy, Chlor, Methoxy oder Methyl steht und $R_3'$ Wasserstoff oder $C_1$-$C_4$-Alkyl bedeutet.

R′ steht besonders bevorzugt für unsubstituiertes oder durch Hydroxy, Carboxy, Sulfo oder Sulfato substituiertes $C_1$-$C_4$-Alkyl, unsubstituiertes oder durch Methyl, Ethyl, Methoxy, Ethoxy, Carboxy, Sulfo und/oder Chlor substituiertes Phenyl oder für einen Rest der zuvor angegebenen Formeln (3′), (3a′), (3b′) oder (3c′).

Hat R″ in Formel (2) die Bedeutung substituiertes $C_1$-$C_4$-Alkly, so gelten hierbei unabhängig die zuvor für R geschilderten Bedeutungen und Bevorzugungen. Steht R″ für einen Reaktivrest, so entspricht dieser vorzugsweise der zuvor angegebenen Formel (3′) und insbesondere bevorzugt der Formel

-alk-$SO_2$-Z′ (3″),

worin alk und Z′ die unter den Formeln (3′) - (3c′) angegebene Bedeutung haben.

R″ steht besonders bevorzugt für Wasserstoff, $C_1$-$C_4$-Alkyl oder den Rest der zuvor angegebenen Formel (3″); insbesondere bevorzugt sind für R″ die Bedeutungen Wasserstoff, Methyl, Ethyl oder der Rest der Formel -$CH_2$-$CH_2$-$SO_2$-Z′, worin Z′ die unter den Formeln (3′) - (3c′) angegebene Bedeutung hat.

Bilden R′ und R″ zusammen mit dem N-Atom einen Rest der zuvor angegebenen Formel (2a), so gelten für die darin enthaltenen Variablen alk und Z die zuvor angegebenen Bedeutungen und Bevorzugungen.

Eine bevorzugte Ausführungsform der erfindungsgemässen Reaktivfarbstoffe betrifft Verbundungen der zuvor angegebenen Formel (1), worin A ein Rest der Formel

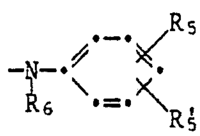

(4),

worin $R_6$ Wasserstoff, Methyl oder Ethyl und $R_5$ Waserstoff, Sulfo, Carboxy, Chlor, Methoxy oder Methyl ist und $R_5'$ unabhängig die Bedeutung von $R_5$ hat, oder ein Rest der Formel

$-NH-CH_2-CH_2-SO_2-Z''$ (3*),

$-NH-CH_2-CH_2-NH-CH_2-CH_2-SO_2-Z''$ (3a″),

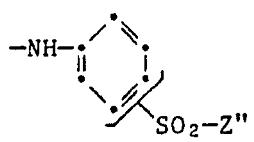

(3b″),

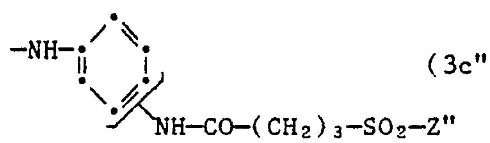

(3c″),

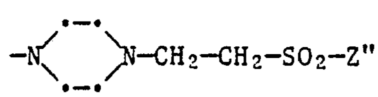

(2a′),

oder

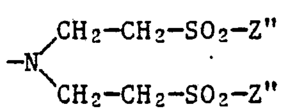

(5) ,

worin $Z''$ jeweils $-CH=CH_2$, $-CH_2-CH_2-Cl$ oder $-CH_2-CH_2-OSO_3H$ bedeutet, ist.

Eine bevorzugte Gruppe von erfindungsgemässen Reaktivfarbstoffen umfasst Verbindungen der zuvor angegebenen Formel (1), worin Fa der Rest eines organischen Farbstoffes der Mono- oder Polyazo-, Metallkomplexazo-, Anthrachinon-, Phthalocyanin-, Formazan- oder Dioxazinreihe, welcher eine oder mehrere Sulfogruppen trägt und darüberhinaus durch einen oder mehrere der zuvor genannten Reste weitersubstituiert sein kann, ist, R Wasserstoff oder einen unsubstituierten oder z.B. durch Halogen, Hydroxy, Cyano, Carboxy, Sulfo, Sulfato, $C_1$-$C_4$-Alkoxycarbonyl, $C_1$-$C_4$-Alkoxy oder Phenyl substituierten $C_1$-$C_4$-Alkylrest darstellt, X Chlor oder Fluor und r 1 bedeutet und A ein Rest der zuvor angegebenen Formel (2), worin $R'$ unsubstituiertes oder durch Hydroxy, Carboxy, Sulfo oder Sulfato substituiertes $C_1$-$C_4$-Alkyl, unsubstituiertes oder durch Methyl, Ethyl, Methoxy, Ethoxy, Carboxy, Sulfo oder Chlor substituiertes Phenyl oder einen Rest der zuvor angegebenen Formel (3'), (3a'), (3b') oder (3c') bedeutet und $R''$ für Wasserstoff, $C_1$-$C_4$-Alkyl oder einen Rest der zuvor angegebenen Formel (3') steht, oder $R'$ und $R''$ zusammen mit dem N-Atom einen Rest der zuvor angegebenen Formel (2a) darstellen, ist.

Eine besonders bevorzugte Gruppe von erfindungsgemässen Reaktivfarbstoffen umfasst Verbindungen der zuvor angegebenen Formel (1), worin Fa der Rest eines organischen Farbstoffes der Monoazo-, Polyazo-oder Metallkomplexazoreihe, welcher eine oder mehrere Sulfogruppen trägt und gegebenenfalls durch einen oder mehrere der zuvor genannten Reste weitersubstituiert sein kann, ist, R für Wasserstoff, Methyl oder Ethyl steht, X Chlor und r 1 ist und A einen Rest der zuvor angegebenen Formeln (2a'), (3''), (3a''), (3b''), (3c''), (4) oder (5) bedeutet.

Bevorzugte Untergruppen der Reaktivfarbstoffe der Formel (1) sind:

a) Mono- oder Disazofarbstoffe der Formel

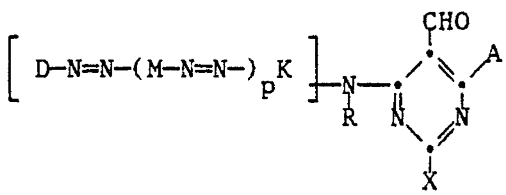

(6)

oder der Formel

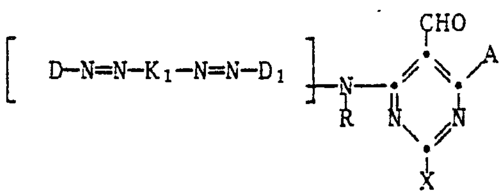

(7),

worin für R, A und X jeweils die zuvor angegebenen Bedeutungen und Bevorzugungen gelten, D und $D_1$ unabhängig voneinander eine Diazokomponente der Benzol- oder Naphthalinreihe darstellen, M eine Mittelkomponente der Benzol- oder Naphthalinreihe ist, K für eine Kupplungskomponente der Benzol- oder Naphthalinreihe oder der heterocyclischen Reihe steht, $K_1$ der Rest einer Kupplungskomponente der Aminonaphtholsulfonsäure-Reihe ist und p 0 oder 1 bedeutet.

Als Untergruppen der Reaktivfarbstoffe der Formel (6) sind zu nennen:

Verbindungen der Formel

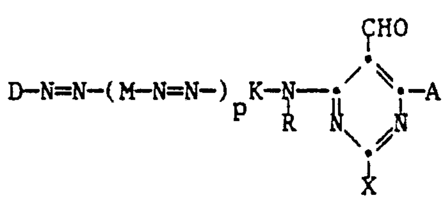

(6a)

und Verbindungen der Formel

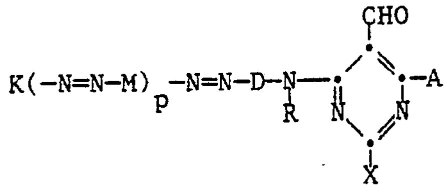 (6b),

worin R, A, X, K, D, M und p jeweils die zuvor angegebene Bedeutung haben.

In Betracht zu ziehen sind auch Reaktivfarbstoffe der Formeln (6), (6a), (6b) und (7), worin der Rest D, $D_1$ und/oder K noch einen weiteren Reaktivrest einschliesst, so dass auch tri- und tetra-reaktive Farbstoffe umfasst sind. Die zusätzlichen, in D, $D_1$ oder K eingeschlossenen Reaktivreste können über eine Aminogruppe, oder in anderer Weise, z.B. durch eine direkte Bindung, an D, $D_1$ bzw. K gebunden sein.

Ein gegebenenfalls in D, $D_1$ oder K eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe gebundener, durch ein abspaltbares Atom oder eine abspaltbare Gruppe substituierter carbo- oder heterocyclischer 4-, 5- oder 6-Ring enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest.

Insbesondere ist der zusätzliche Reaktivrest ein direkt oder über ein Brückenglied gebundener Vinylsulfonyl-, β-Sulfatoethylsulfonyl-, β-Thiosulfatoethylsulfonyl, β-Chlorethylsulfonyl oder β-Acetoxyethylsulfonyl-Rest.

Die obigen Erläuterungen gelten sinngemäss auch für Metallkomplexazofarbstoffe, sowie für andere in der Definition des Farbstoffrestes D in Formel (1) genannte Chromophore.

Die Reste D und $D_1$ können sich z.B. von den folgenden Diazokomponenten ableiten:

Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3-oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-4-methoxybenzol-2-sulfonsäure, 1-Amino-4-ethoxybenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin -2,5,7-trisulfonsäure, 2-Aminonaphthalin-1,5,7-, -3,6,8- oder -4,6,8-trisulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1-Amino-4-β-sulfatoethylsulfonylbenzol, 1-Amino-4-vinylsulfonylbenzol, 1-Amino-3-vinylsulfonylbenzol, 1-Amino-4-β-sulfatoethylsulfonylbenzol-2-sulfonsäure, 1-Amino-4-[β′-chlorethylsulfonyl)ethylaminocarbonyl]benzol-2-sulfonsäure, 1-Amino-4-β-(vinylsulfonyl)ethylaminocarbonylbenzol-2-sulfonsäure, 1-Amino-3-γ-(vinylsulfonyl)butyrylaminobenzol-6-sulfonsäure, 1-Amino-3-vinylsulfonyl-6-methoxybenzol, 1-Amino-3-β-(vinylsulfonyl)ethylaminocarbonyl-6-methoxybenzol und 1-Amino-3-β-(vinylsulfonyl)ethylaminocarbonylbenzol; ferner Diaminobenzole oder Diaminonaphthaline, wie 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6- disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1-Amino-3-aminomethylbenzol-6-sulfonsäure, 1-Amino-3-aminomethyl-4-methoxybenzol-2-sulfonsäure, 2,6-Diaminonaphthalin-4,8-disulfonsäure, 2-Amino-5-aminomethylnaphthalin-1-sulfonsäure und 2-Amino-5-aminomethylnaphthalin-1,7-disulfonsäure; statt eines Diamins kann auch eine Aminoacetylaminoverbindung eingesetzt werden, aus welcher nachträglich die Acetylgruppe durch Verseifen wieder abgespalten wird, z.B. 1-Acetylamino-3-aminobenzol-4-sulfonsäure oder 1-Acetylamino-4-aminobenzol-3-sulfonsäure.

Der Rest M kann sich z.B. von folgenden Mittelkomponenten ableiten:

Anilin; m-Toluidin;

2,5-Dimethyl- oder -Dimethoxy-anilin;
m-Amino-anisol; m-Acetylamino-,
m-Propionylamino-, m-Butyrylamino- oder
m-Benzoylamino-anilin;
m-Amino-phenylharnstoff;
4-Acetamino-2-amino-toluol oder -anisol;
2-Amino-4-methylanisol;
1-Aminonaphthalin-6- oder -7-sulfonsäure;
2-Amino-4-acetylamino-benzolsulfonsäure;
2-Amino-5-naphthol-7-sulfonsäure;
2-Amino-8-naphthol-6-sulfonsäure;
2-(4-Aminobenzoyl-amino)-5-naphthol-7-sulfonsäure;
Acetoacet-3-sulfo-4-amino-anilid.

Aus der grossen Zahl der möglichen Kupplungskomponenten K und $K_1$ seien die folgenden beispielhaft genannt:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6-oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6-oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-9-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6-oder -4,6-disulfonsäure, 2-Benzoylamino-5-hydroxynaphthalin-7-sulfonsäure, 2-Amino-5-hydroxynaphthalin-7-sulfonsäure, 2-Methyl-bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Ethylamino-8-hydroxynaphthalin-6-sulfonsäure, 2-(N-Acetyl-N-methylamino)-8-hydroxynaphthalin-6-sulfonsäure, 2-Acetylamino-9-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-9-hydroxynaphthalin-3,6- bzw. -4,6-disulfonsäure, 1-Acetylamino-8-hydroxynaphthalin-3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin-3,6-bzw. -4,6-disulfonsäure, 1-(3′-Aminobenzoylamino)-8-hydroxynaphthalin-3,6-bzw. -4,6-disulfonsäure, 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 3-Methylpyrazolon-(5), 1-Phenyl-3-methyl-5-pyrazolen, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1-(5′,7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxypyridon-(2), 1-Ethyl-3-cyan- oder -3-chlor-4-methyl-6-hydroxypyridon-(2), 1-Ethyl-3-sulfomethyl-4-methyl-6-hydroxypyridon-(2), 2,4,6-Triamino-3-cyanpyridin, 2-(3′-Sulfophenylamino)-4,6-diamino-3-cyanpyridin, 2-(2′-Hydroxyethylamino)-3-cyan-4-methyl-6-aminopyridin, 2,6-Bis-(2′-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2-(2′,5′-disulfophenylazo)-naphthalin-3,6-di-sulfonsäure, 1-β-Aminoethyl-3-cyan-4-methyl-6-hydroxypyridon-(2), 1-γ-Aminopropyl-3-sulfomethyl-4-methyl-6-hydro xypyridon-(2), 1,3-Diaminobenzol, 1-Amino-3-N,N-di-β-hydroxyethylaminobenzol, 1-Amino-3-N,N-di-β-sulfatoethylaminobenzol, 1-Amino-3-N,N-di-β-hydroxyethylamino-4-methoxybenzol, 1-Amino-3-N,N-di-β-sulfatoethylamino-4-methoxybenzol, 1-Amino-3-sulfobenzylamino-benzol, 1-Amino-3-sulfo-benzylamino-4-chlorbenzol, 1-Amino-3-N,N-di-sulfo-benzylaminobenzol, N,N-Di-(β-sulfatoethyl)-anilin, 3-Acetylamino-N,N-di-(β-sulfatoethyl)-anilin, 3-Methyl-N,N-di-(β-sulfatoethyl)anilin, N-Ethyl-N-(β-hydroxyethyl)-anilin, N-Ethyl-N-(β-acetoxyethyl)-anilin, 3-Acetylamino-N,N-di(β-hydroxyethyl)-anilin, 3-Methyl-N,N-di-(β-acetoxyethyl)-anilin, 2-Methoxy-5-acetylamino-N-(β-acetoxyethyl)-N-benzylanilin, 2-Chlor-5-acetylamino-N-(γ-phenoxy-β-hydroxy-n-propyl)-anilin, 3-Ureidoanilin, N-Ethyl-N-(3′-sulfobenzyl)-anilin, 3-Methyl-N-ethyl-N-(β-sulfatoethyl)-anilin, 3-Methyl-N,N-di-(β-hydroxyethyl)-anilin, 3-Methyl-6-methoxy-N,N-di-(β-hydroxyethyl)-anilin.

Entsprechen die erfindungsgemässen Reaktivfarbstoffe der Formel (6) bzw. (7) und handelt es sich demgemäss bei Fa in Formel (1) um den Rest einer Mono- oder Disazoverbindung, so kann sich dieser z.B. von den folgenden organischen Mono- oder Disazofarbstoffen ableiten:

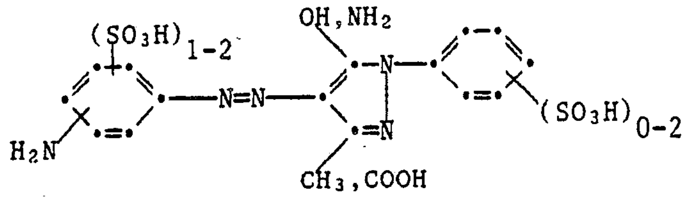

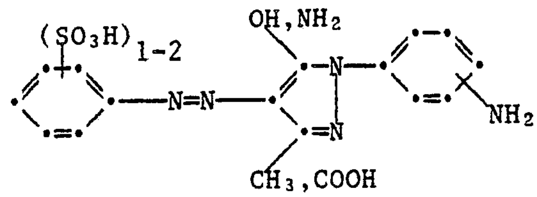

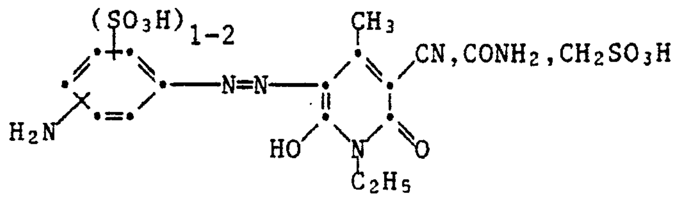

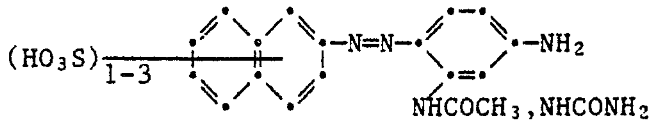

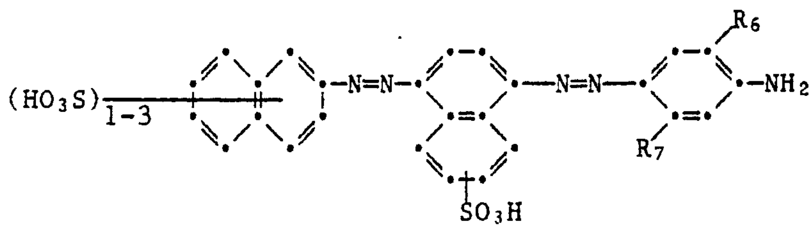

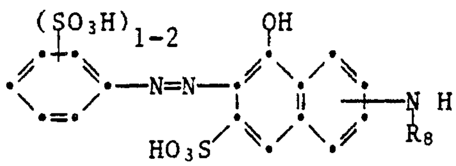

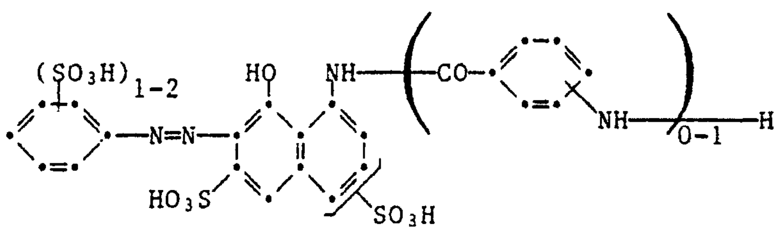

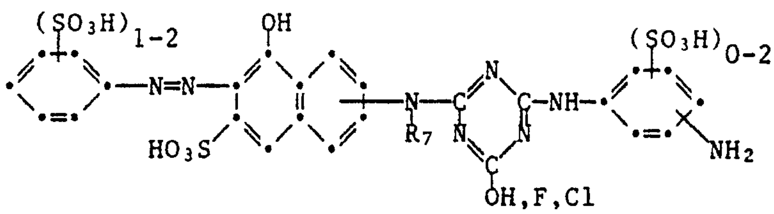

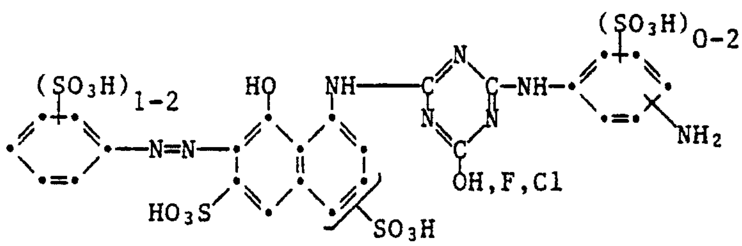

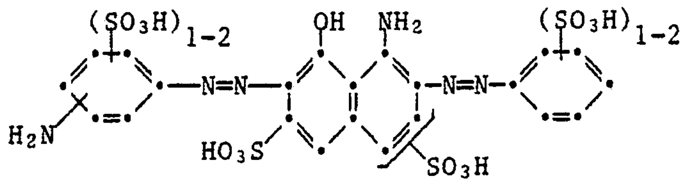

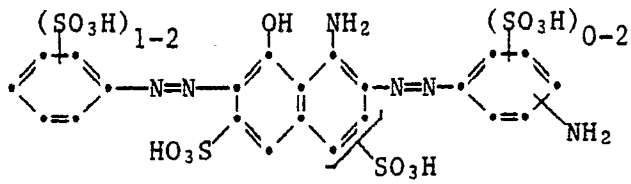

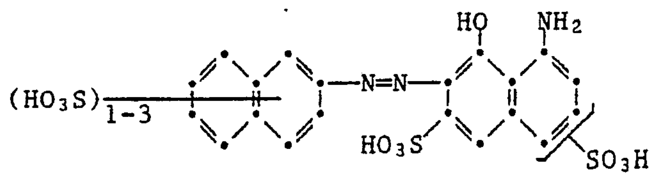

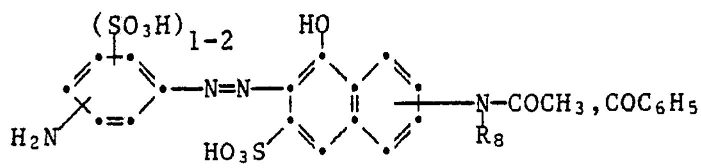

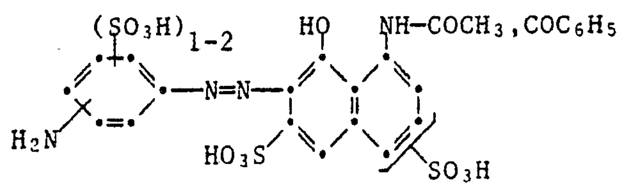

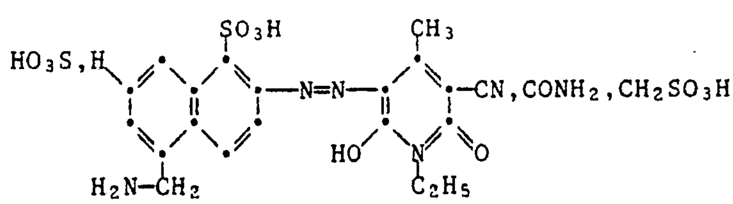

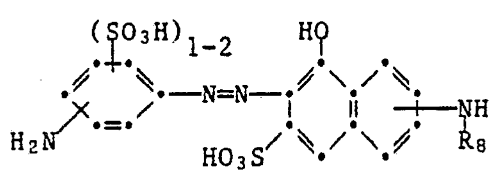

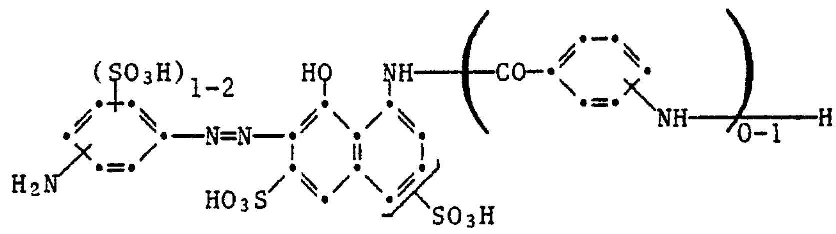

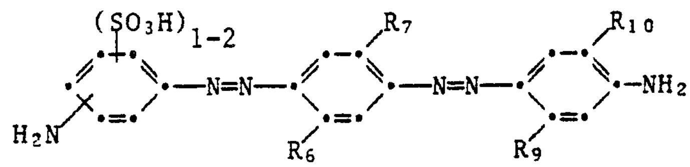

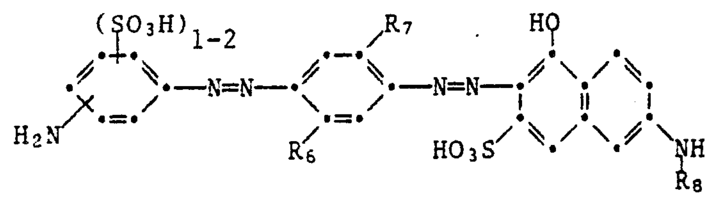

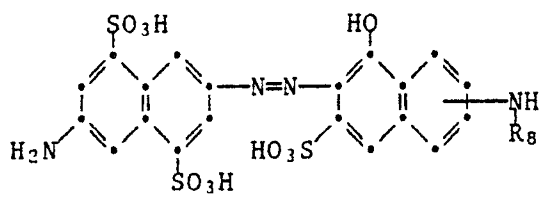

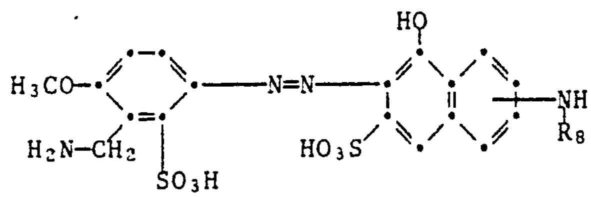

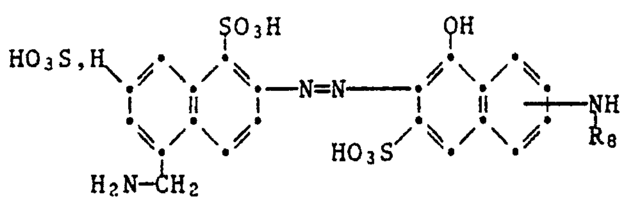

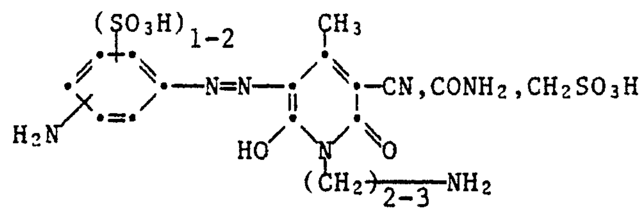

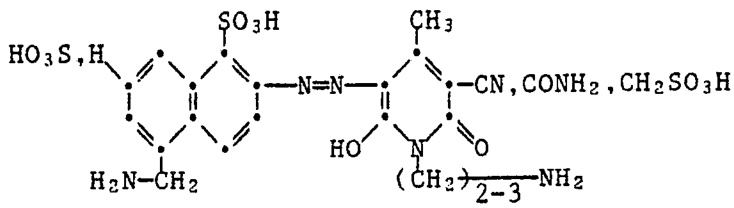

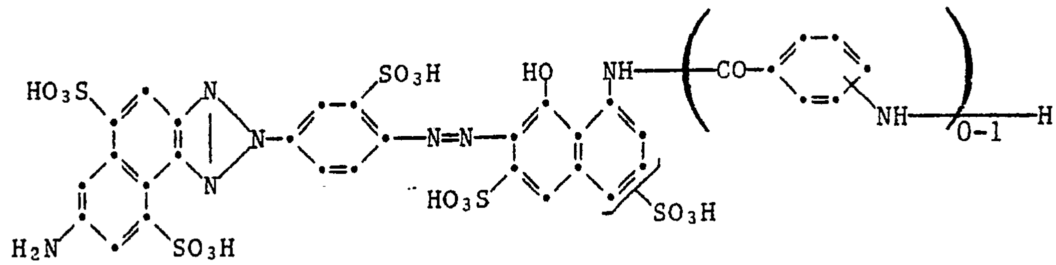

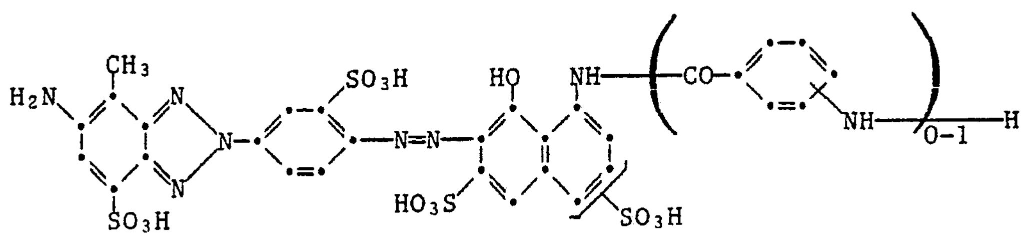

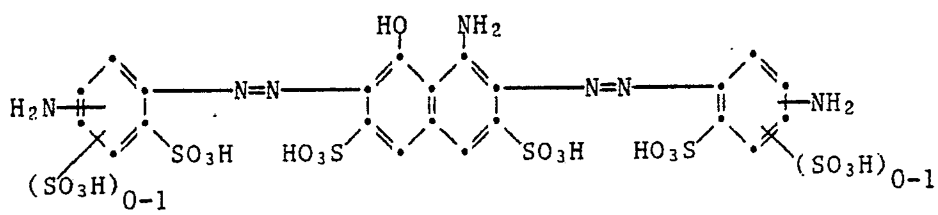

In den oben aufgeführten Formeln bedeuten $R_6$, $R_7$, $R_9$ und $R_{10}$ unabhängig voneinander z.B. Wasserstoff, $C_1$-$C_4$-Alkyl, $C_1$-$C_4$-Alkoxy, $C_1$-$C_4$-Alkanoylamino, Ureido oder Halogen und $R_8$ steht z.B. für Wasserstoff oder $C_1$-$C_4$-Alkyl.

b) Metallkomplexe von Mono- oder Disazofarbstoffen der zuvor angegebenen Formeln (6) oder (7), welche zur Metallkomplexbildung befähigte Gruppen, z.B. Hydroxy, Carboxy, Amino oder Sulfo, aufweisen.

Handelt es sich bei Fa in Formel (1) um den Rest eines Metallkomplexazofarbstoffes, so kann sich Fa z.B. von einem Metallkomplex der im folgenden genannten Farbstoffe ableiten:

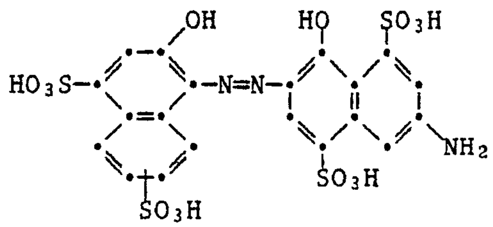

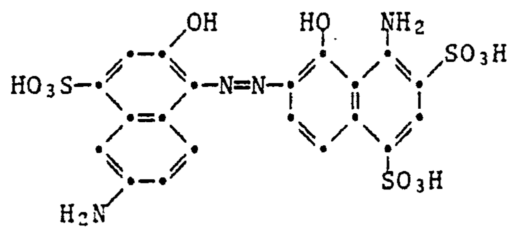

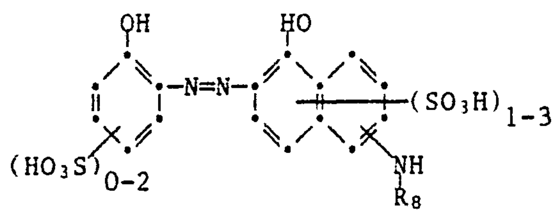

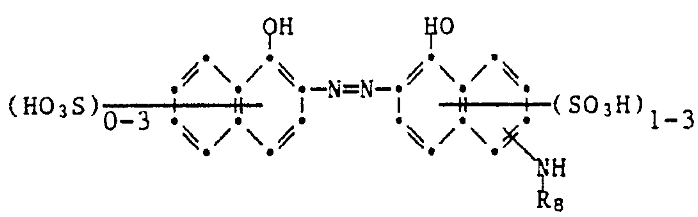

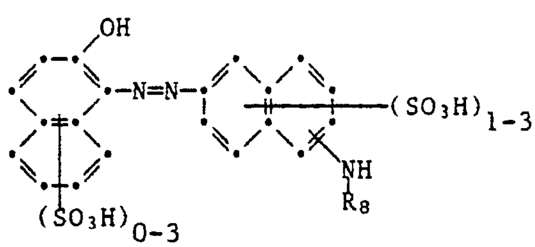

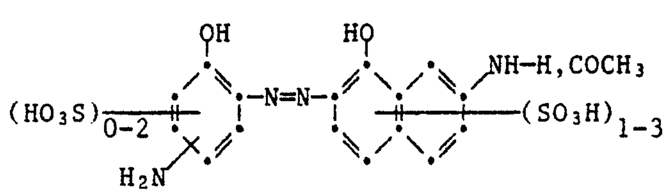 ,

wobei $R_8$ jeweils die zuvor angegebene Bedeutung hat.

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Beispiele für geeignete Kupferkomplexfarbstoffe, die dem Rest Fa in Formel (1) zugrunde liegen können, sind:

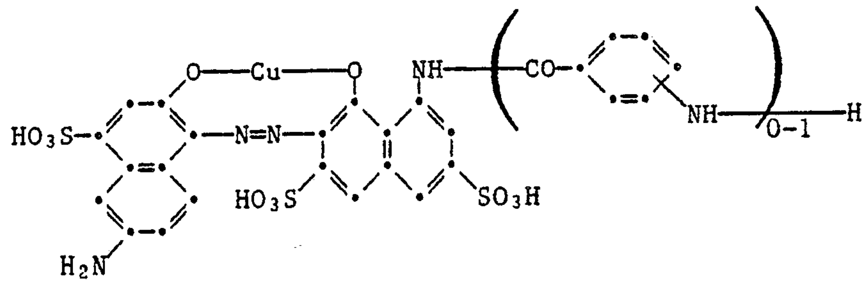

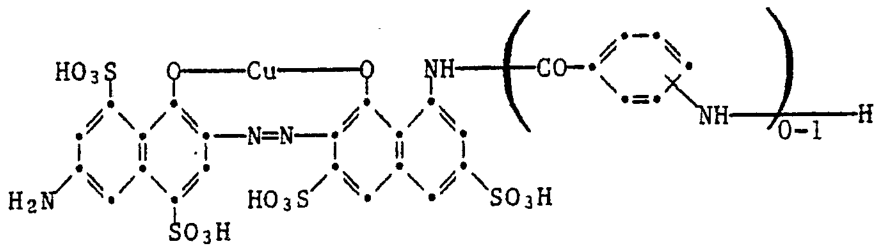

c) Anthrachinonfarbstoffe der Formel

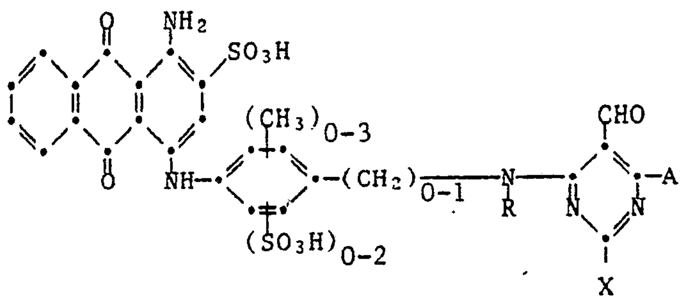

(8),

worin R, A und X jeweils die zuvor angegebene Bedeutung haben.

d) Formazanfarbstoffe der Formel

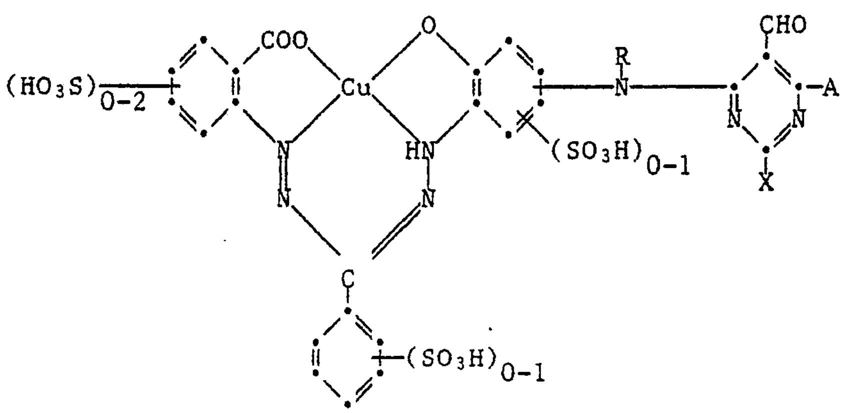

(9),

worin für R, A und X jeweils die zuvor angegebenen Bedeutungen und Bevorzugungen gelten.

e) Phthalocyaninfarbstoffe der Formel

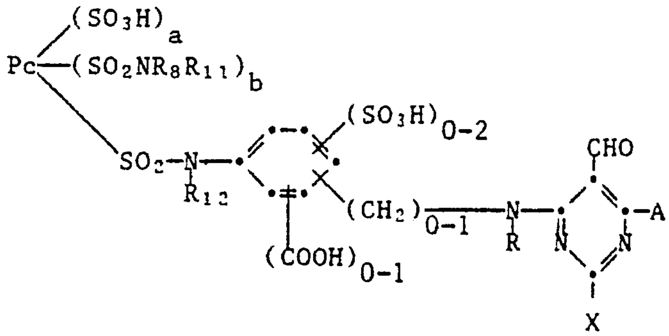

(10),

worin R, A und X jeweils die zuvor angegebene Bedeutung haben, Pc der Rest eines Cu- oder Ni-Phthalocyanins ist, $R_8$, $R_{11}$ und $R_{12}$ unabhängig voneinander $C_1$-$C_4$-Alkyl und insbesondere Wasserstoff bedeuten und a und b ganze oder gebrochene Zahlen von 1 bis 3 sind, wobei a und b zusammen 3,0 ergeben.

f) Reaktivfarbstoffe der Formel (1) worin Fa z.B. ein Rest eines Dioxazinfarbstoffs der Formel

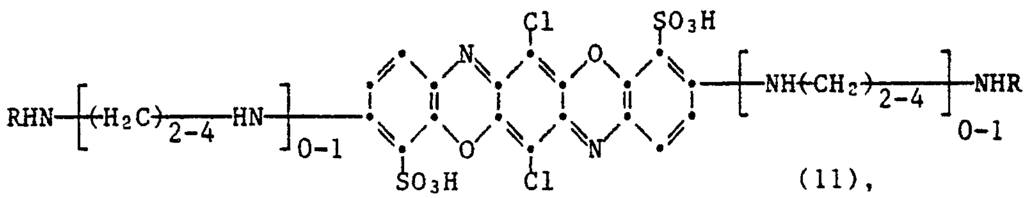

(11),

worin R die zuvor angegebene Bedeutung hat, ist.

Die erfindungsgemässen Reaktivfarbstoffe können z.B. hergestellt werden, indem man organische Farbstoffe der Formel

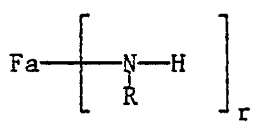

(12)

oder Farbstoffvorprodukte, mindestens ein Aequivalent eines Pyrimidins der Formel

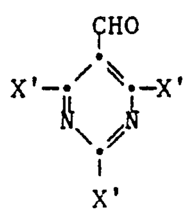

(13)

und mindestens ein Aequivalent eines Amins der Formel

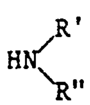

(2')

in beliebiger Reihenfolge zu einem Reaktivfarbstoff der Formel (1) kondensiert, wobei Fa, R, R', R'' und r jeweils die zuvor angegebene Bedeutung haben und X' jeweils die Bedeutung von X als ein als Anion abspaltbarer Substituent hat, und dass man im Falle der Verwendung von Farbstoffvorprodukten diese in die gewünschten Endfarbstoffe umwandelt.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungsreaktionen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Halogenpyrimidinrestes eintritt, muss ein Zwischenprodukt, welches Acetylaminogruppen enthält, zwecks Abspaltung der Acetylgruppen verseift werden, bevor mit einem Halogenpyrimidin kondensiert wird. Welche Reaktion bei der Herstellung eines sekundären Kondensationsproduktes aus einem Amin der Formel (2′), dem Pyrimidin der Formel (13) und dem organischen Farbstoff der Formel (12) oder einem Vorprodukt zweckmässigerweise zuerst ausgeführt wird, die des Pyrimidins mit dem Amin oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen. Als weitere Umwandlungsreaktion kommt eine nachträgliche Umsetzung am Rest X′ in Betracht. Gegebenenfalls können abspaltbare Reste X′ nach der Kondensation des Pyrimidins der Formel (13) mit einem Farbstoff der Formel (12) oder einem Farbstoffvorprodukt gegen andere abspaltbare Reste ausgetauscht werden. So kann z.B. durch Einwirkung eines Halogenierungsmittels ein Halogenatom gegen ein anderes ausgetauscht werden. Durch Einwirkung tertiärer Basen, wie Trimethylamin, Pyridin oder 1,4-Diazabicyclo-[2,2,2]-octan werden entsprechende Ammoniumverbindungen, und durch Quaternisierung mit Hydrazinen, wie N,N-Dimethylhydrazin, entsprechende Hydraziniumverbindungen erhalten. Mit Sulfiten, z.B. Natriumsulfit, und Sulfinaten kann man einen Austausch von Halogen gegen die Sulfogruppen bzw. eine Sulfonylgruppe, z.B. die 3′-Carboxyphenylsulfonylgruppe und dergl., bewirken. Durch Umsetzung mit Cyaniden, z.B. Kaliumcyanid, und Thiocyanaten, z.B. Kaliumrhodanid, ist ein Ersatz von Chlor gegen die Nitril- bzw. Thiocyanatgruppe möglich, die ebenfalls reaktiv sind. Ferner können auch Halogenatome oder andere reaktive Gruppen durch Einwirkung von Natriumazid oder Verbindungen, die reaktive Methylengruppen enthalten, z.B. Cyanoessigester, Malonester und Acetylaceton, gegen die entsprechenden Reste ausgetauscht werden. Der Ersatz eines abspaltbaren Substituenten X′ durch einen anderen abspaltbaren Substituenten kann in vielen Fällen auch vor der Kondensation des Pyrimidins der Formel (13) mit einem Farbstoff der Formel (12) oder einem Farbstoffvorprodukt erfolgen.

Ferner können Eliminierungsreaktionen an die Synthese angeschlossen werden. Beispielsweise kann man Reaktivfarbstoffe der Formel (1), welche Sulfatoethylsulfonylreste enthalten, mit halogenwasserstoffabspaltenden Mitteln, wie Natriumhydroxid, behandeln, wobei die Sulfatoethylsulfonylreste in Vinylsulfonylreste übergehen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff, worin Z ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Z die Vinylgruppe $H_2C=CH-$ ist, und lagert an das Zwischenprodukt Thioschwefelsäure an, wobei ein Rest $HO_3SS-CH_2CH_2-$entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes für Y in eine Verbindung der Formel (1) oder ein Zwischenprodukt anstelle der Sulfatogruppe, beispielsweise einer Thiosulfatogruppe erfolgt in an sich bekannter Weise. Der Weg der Herstellung über eine Zwischenstufe des Reaktivrestes geht in vielen Fällen einheitlich und vollständig.

Die Verfahrensvariante, bei welcher man von Farbstoffvorprodukten ausgeht, ist geeignet zur Herstellung von Reaktivfarbstoffen der Formel (1), worin Fa der Rest eines aus zwei oder mehr als zwei Komponenten zusammengesetzten Farbstoffes ist. Beispiele für derartige, aus zwei oder mehr als zwei Komponenten zusammengesetzte Farbstoffe sind: Monoazo-, Disazo-, Trisazo-, Metallkomplexazo-, Formazan- und Azomethinfarbstoffe. Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Rest in hierfür geeignete Zwischenprodukte mit Farbstoffcharakter einführt.

Falls man von Farbstoffvorprodukten ausgeht, gelangt man z.B. zu den Reaktivfarbstoffen der Formel (1), indem man eine Komponente des Farbstoffes der Formel (12), die eine Gruppe -N(R)H enthält, und ein Pyrimidin der Formel (13) kondensiert, vorher oder nachher mit einem Amin der Formel (2′) kondensiert, und mit der anderen Komponente des Farbstoffes der Formel (12) umsetzt. Bei der Herstellung der bevorzugten Azofarbstoffe müssen die Diazokomponenten und die Kupplungskomponenten zusammen mindestens eine Aminogruppe -N(R)H aufweisen und darüberhinaus die Diazokomponenten eine Aminogruppe $-NH_2$ enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem 2,4,6-Trihalogen-pyrimidin durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho′-Stellung zur Azobrücke komplexbildende Gruppen, z.B. Hydroxy-oder Carboxygruppen, enthalten, vor oder gegebenenfalls auch nach der Kondensation mit dem 2,4,6-Trihalogenpyrimidin der Formel (13) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxidative Kupferung in Betracht.

Die wichtigsten Verfahrensvarianten sind in den Ausführungsbeispielen dargestellt.

Die Verbindungen der Formel (12) sind bekannt oder können auf an sich bekannte Weise hergestellt werden. Eine Auswahl von brauchbaren Verbindungen der Formel (12) findet sich bei der Besprechung der bevorzugten Untergruppen der erfindungsgemässen Reaktivfarbstoffe.

Desgleichen sind die Pyrimidinverbindungen der Formel (13) z.B. aus der DE-A 2,310,334 bekannt oder können analog dazu hergestellt werden.

Die Verbindungen der Formel (2′) sind an sich bekannt oder können analog zu bekannten Verfahren hergestellt werden.

Amine der Formel (2′), die einen Reaktivrest aufweisen, sind z.B. aus den EP-A 0 141 776, 0 144 766 oder 0 159 292 bekannt oder können analog dazu hergestellt werden.

Die erfindungsgemässen Reaktivfarbstoffe der Formel (1) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemässen Reaktivfarbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die Farbstoffe der Formel (1) lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Reaktivfarbstoffe zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich Bedrucken von stickstoffhaltigen Fasern, z.B. von Wolle oder Seide oder von Mischgeweben, die Wolle oder Seide enthalten.

Die mit den erfindungsgemässen Farbstoffen der Formel (1) hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie

eine gute Plissierechtheit, Bügelechtheit und Reibechtheit.

Die nachfolgenden Beispiele dienen zur Erläuterung der Erfindung. Die Temperaturen sind in Celsiusgraden angegeben. Teile sind Gewichtsteile, die Prozentangaben beziehen sich auf Gewichtsprozente, sofern nicht anders vermerkt. Gewichtsteile stehen zu Volumteilen im Verhältnis von Kilogramm zu Liter.

Beispiel 1:

14,9 g des Chromophors der Formel

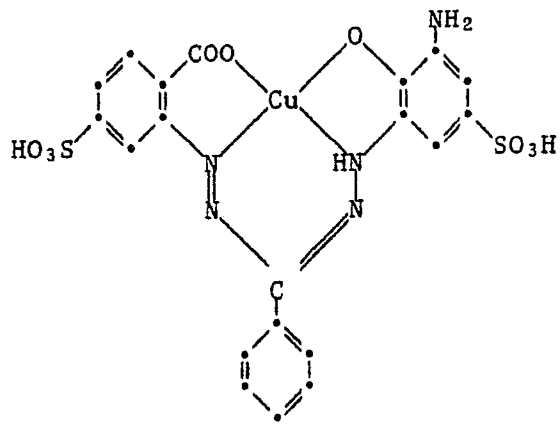

werden in 150 ml Wasser neutral gelöst und zu dieser Lösung bei einer Temperatur von 0-5° C 6,3 g 2,4,6-Trichlor-5-formylpyrimidin in 70 ml Aceton zugetropft; der pH wird dabei durch Zutropfen von 2n-Natriumhydroxidlösung zwischen 6 und 7 gehalten. Nachdem die Acylierung vollständig ist, wird eine neutrale Lösung von 4,5 g 3-Aminobenzolsulfonsäure in 20 ml Wasser bei 25-30° C zugetropft und dabei der pH-Wert durch Zugabe von 2n-Natriumhydroxidlösung zwischen 6 und 7 gehalten. Nach einem einstündigen Nachrühren bei 35° C wird der Farbstoff mit Kochsalz ausgesalzen, anschliessend filtriert, mit Dinatriumhydrogenphosphat stabilisiert und im Vakuum getrocknet.

Der so erhaltene Farbstoff der Formel

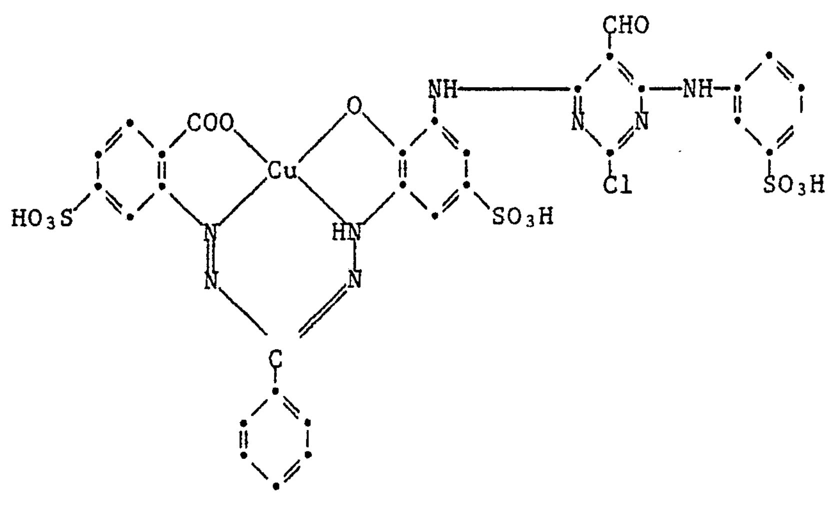

färbt Baumwolle in blauen Tönen mit guten Allgemeinechtheiten.

Beispiel 2:

13,6 g des Chromophors der Formel

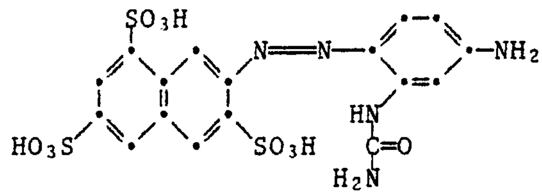

werden in 150 ml Wasser neutral gelöst und bei pH 6-6,5 und einer Temperatur von 0-5°C mit einer Lösung von 6 g 2,4,6-Trichlor-5-formylpyrimidin in 25 ml Aceton acyliert; dabei wird der pH-Wert des Reaktionsgemisches durch Zutropfen von 2n-Natriumhydroxidlösung bei 6-6,5 gehalten. Die Farbstofflösung wird klärfiltriert und dann mit einer Lösung von 7,7 g 2-(3-Aminophenylsulfonyl)ethylhydrogensulfat in 150 ml Wasser bei pH 5-5,5 und einer Temperatur von 25°C umgesetzt. Anschliessend wird die Reaktionslösung mit 2n-Natriumhydroxidlösung auf pH 10 eingestellt und 20 Minuten lang vinyliert. Der Farbstoff wird mit Kaliumchlorid ausgesalzen, filtriert, mit Dinatriumhydrogenphosphatlösung stabilisiert und im Vakuum getrocknet. Der so erhaltene Reaktivfarbstoff der Formel

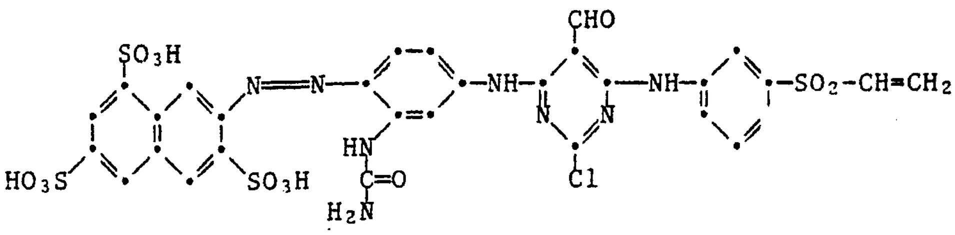

färbt Baumwolle in goldgelben Tönen mit guten Allgemeinechtheiten.

Beispiele 3-4:

Verfährt man wie in den Beispielen 1 oder 2 beschrieben und verwendet anstelle der dort benutzten Chromophore und aromatischen Amine die in der Tabelle angegebenen, werden analoge Farbstoffe erhalten, die Baumwolle in den in der Tabelle 1 angegebenen Nuancen färben.

Tabelle 1

| Beispiel Nr. | Chromophor | Amin | Nuance auf Baumwolle |
|---|---|---|---|
| 3 | 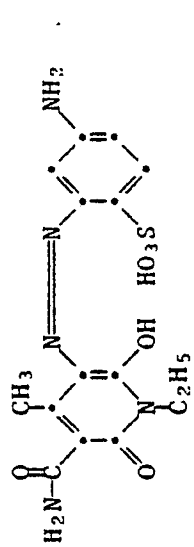 | 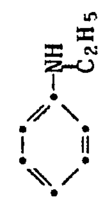 | grünstichig gelb |
| 4 | 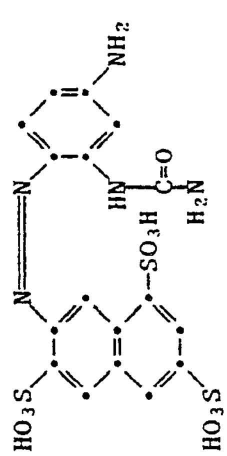 | 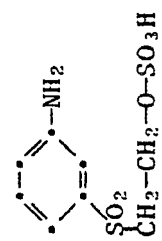 | goldgelb |

Beispiele 5-59:

Durch Kondensation von 2,4,6-Trichlor-5-formylpyrimidin mit den in der Tabelle 2 aufgelisteten aminogruppenhaltigen Farbstoffen und Aminen nach den Angaben der Beispiele 1 und 2 erhält man weitere Reaktivfarbstoffe, die Baumwolle in den angegebenen Tönen färben:

Tabelle 2

| Beispiel Nr. | Farbstoff | Amin | Nuance auf Baumwolle |
|---|---|---|---|
| 5 | 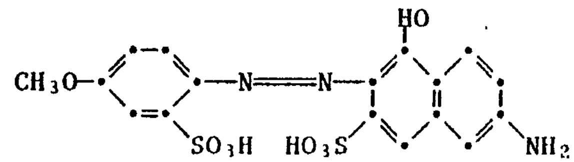 | 1-Aminobenzol-3-β-sulfatoethylsulfon | scharlach |
| 6 | 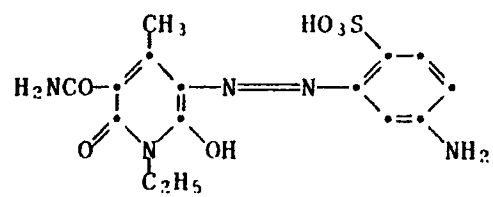 | 1-Aminobenzol-4-β-sulfatoethylsulfon | grünstichig gelb |
| 7 | 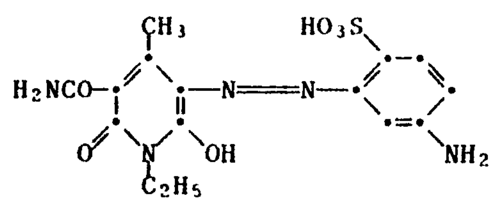 | β-(β-Chlorethyl-sulfonyl)-ethylamin | grünstichig gelb |
| 8 | 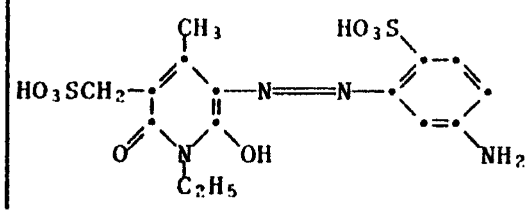 | β-(β-Chlorethyl-sulfonyl)-ethylamin | grünstichig gelb |

| Beispiel Nr. | Farbstoff | Amin | Nuance auf Baumwolle |
|---|---|---|---|
| 9 | 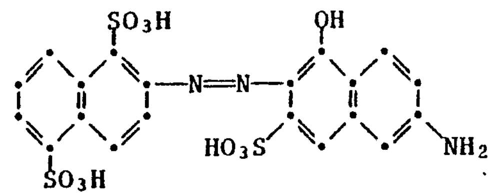 | β-(β-Chlorethyl-sulfonyl)-ethylamin | orange |
| 10 | 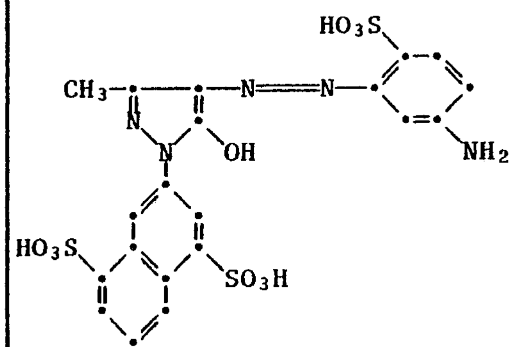 | 1-Aminobenzol-3-β-sulfatoethylsulfon | gelb |
| 11 | 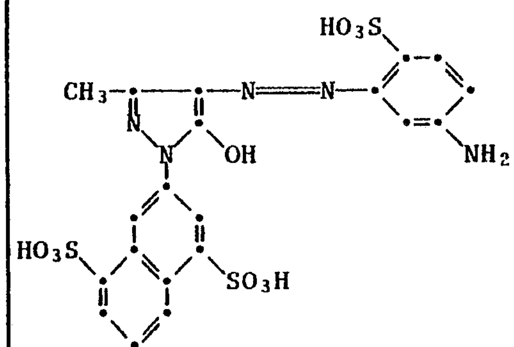 | β-(β-Chlorethylsulfonyl)-ethylamin | gelb |

| Beispiel Nr. | Farbstoff | Amin | Nuance auf Baumwolle |
|---|---|---|---|
| 12 | 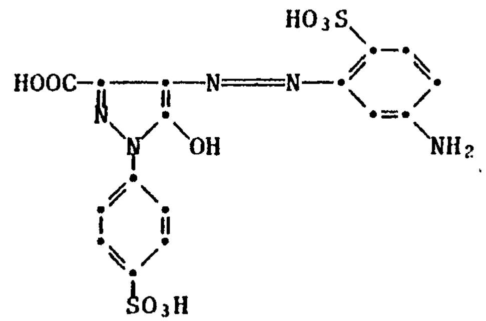 | β-(β-Chlorethylsulfonyl)-propylamin | gelb |
| 13 | 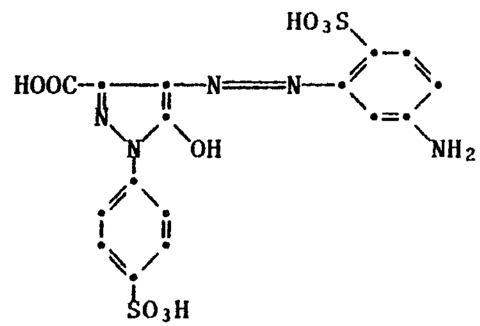 | Bis-[β-(β-chlorethylsulfonyl)-ethyl]-amin | gelb |
| 14 | 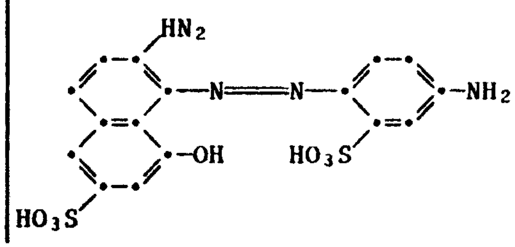 | Bis-[β-(β-chlorethylsulfonyl)-ethyl]-amin | blaustichig rot |

| Beispiel Nr. | Farbstoff | Amin | Nuance auf Baumwolle |
|---|---|---|---|
| 15 | 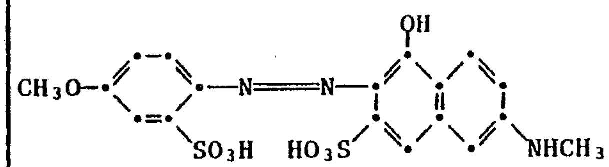 | β-(β-Sulfatoethyl-sulfonyl)-ethylamin | scharlach |
| 16 | 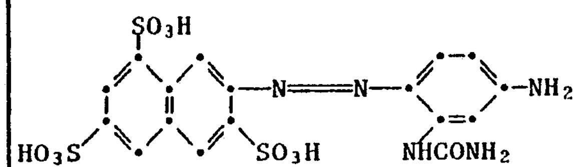 | β-(β-Sulfatoethyl-sulfonyl)-ethylamin | goldgelb |
| 17 | 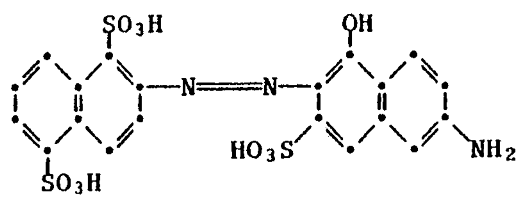 | β-Vinylsulfonyl-ethylamin | orange |
| 18 | 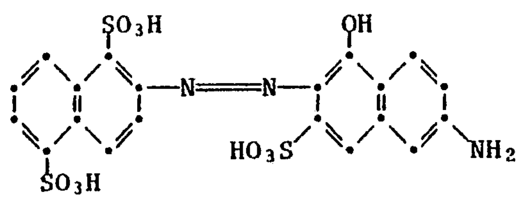 | β-(β-Chlorethyl-sulfonyl)-ethylamin | orange |

| Beispiel Nr. | Farbstoff | Amin | Nuance auf Baumwolle |
|---|---|---|---|
| 19 | 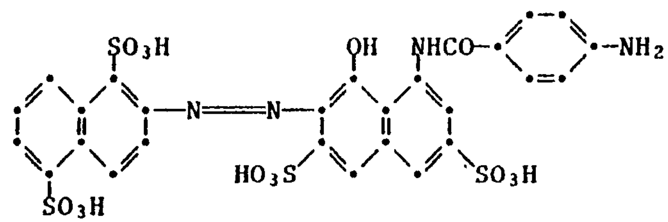 | β-(β-Chlorethyl-sulfonyl)-ethylamin | blaustichig rot |
| 20 | 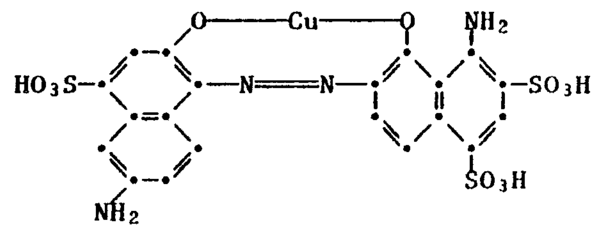 | β-(β-Chlorethyl-sulfonyl)-ethylamin | blau |
| 21 | 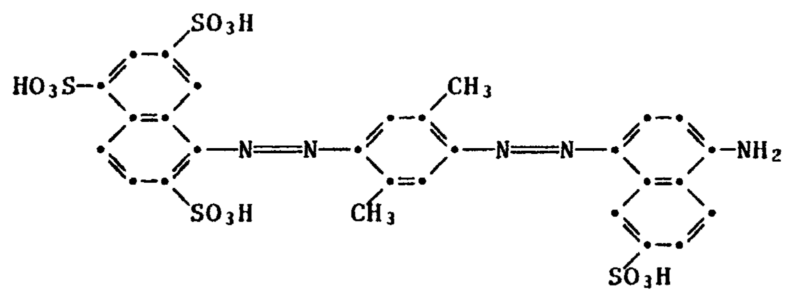 | Bis-[β-(β-chlorethyl-sulfonyl)-ethyl]-amin | braun |

| Beispiel Nr. | Farbstoff | Amin | Nuance auf Baumwolle |
|---|---|---|---|
| 22 | 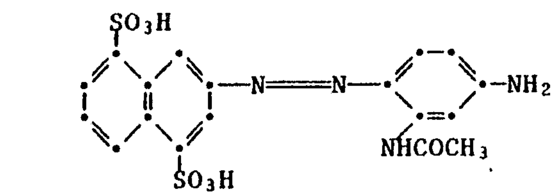 | β-(β-Sulfatoethyl-sulfonyl)-ethylamin | gelb |
| 23 | 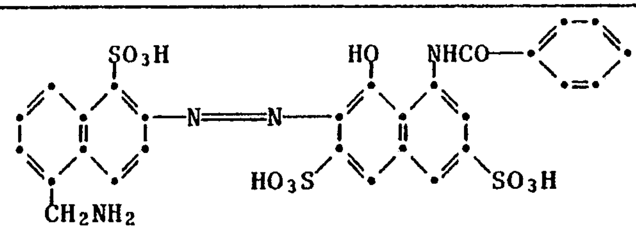 | N-Methyl-N-β-(β-chlorethyl-sulfonyl)-ethylamin | blaustichig rot |
| 24 | 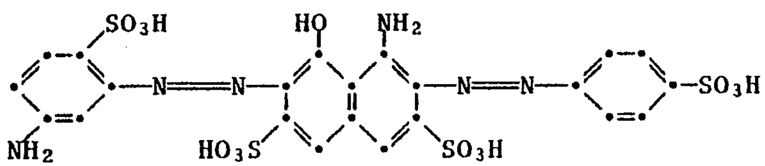 | β-(β-Sulfato-ethyl-sulfonyl)-ethylamin | dunkelblau |
| 25 | 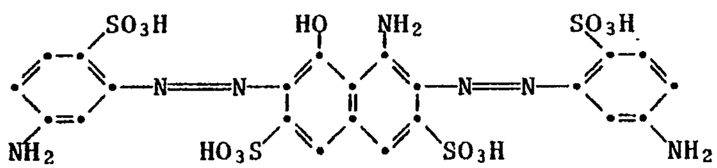 | β-(β-Sulfato-ethyl-sulfonyl)-ethylamin | grünstichig marineblau |

| Beispiel Nr. | Farbstoff | Amin | Nuance auf Baumwolle |
|---|---|---|---|
| 26 | 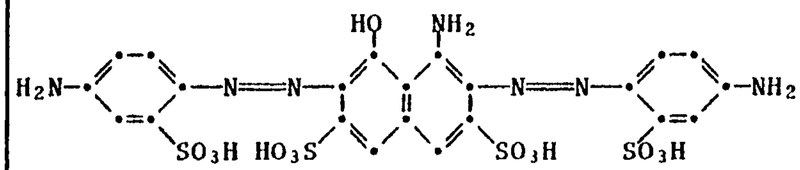 | β-(β-Sulfato-ethyl-sulfonyl)-ethylamin | grünblau |
| 27 | 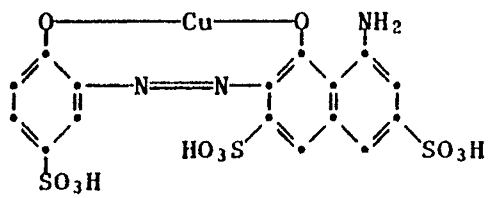 | β-(β-Sulfato-ethyl-sulfonyl)-ethylamin | violett |
| 28 | 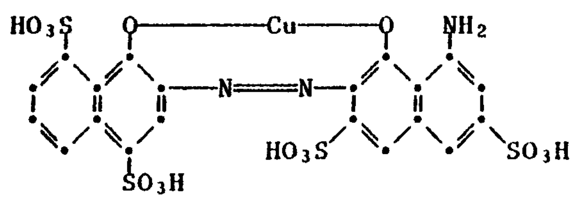 | β-Vinyl-sulfonyl-ethylamin | blau |
| 29 | 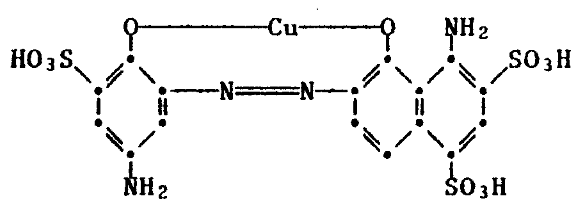 | 1-Aminobenzol-3-vinylsulfon | rotstichig blau |

| Beispiel Nr. | Farbstoff | Amin | Nuance auf Baumwolle |
|---|---|---|---|
| 30 | 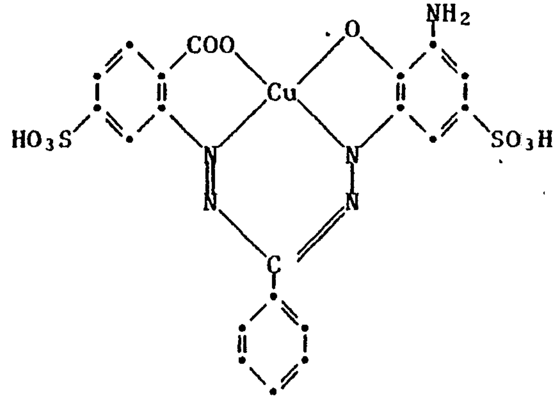 | 1-Aminobenzol-4-β-sulfatoethylsulfon | blau |
| 31 | 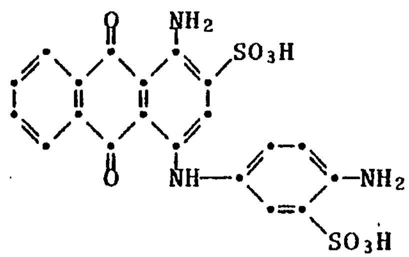 | β-(β-Chlorethyl-sulfonyl)-ethylamin | grünstichig blau |
| 32 | 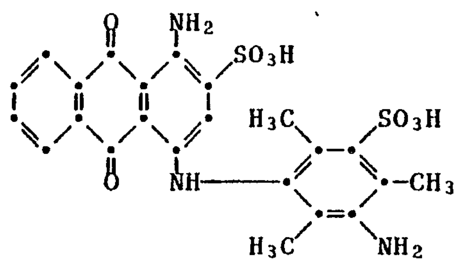 | β-(β-Chlorethyl-sulfonyl)-ethylamin | königsblau |

| Beispiel Nr. | Farbstoff | Amin | Nuance auf Baumwolle |
|---|---|---|---|
| 33 | 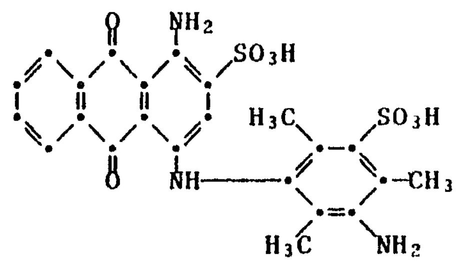 | β-(β-Thiosulfato-ethylsulfonyl)-ethylamin | königsblau |
| 34 | 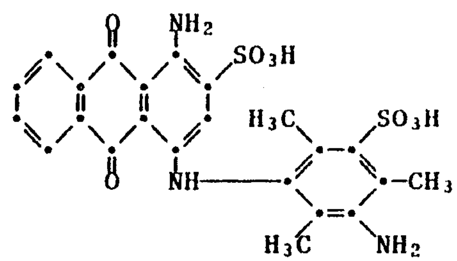 | β-(β-Acetoxyethyl-sulfonyl)-ethylamin | königsblau |
| 35 | 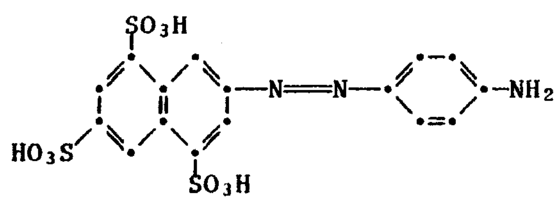 | β-(β-Acetoxyethyl-sulfonyl)-ethylamin | gelb |
| 36 | 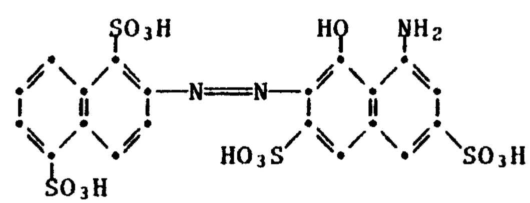 | β-(β-Acetoxyethyl-sulfonyl)-ethylamin | blaustichig rot |

| Beispiel Nr. | Farbstoff | Amin | Nuance auf Baumwolle |
|---|---|---|---|
| 37 | 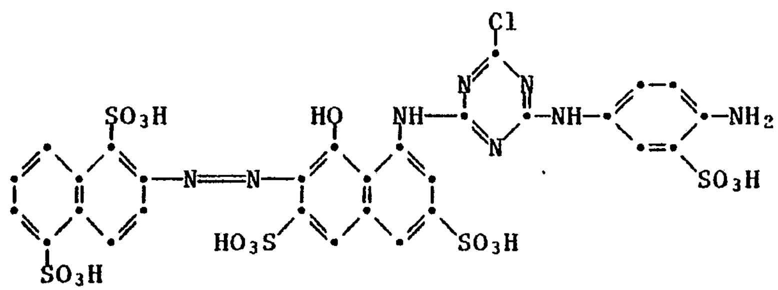 | β-(β-Sulfatoethyl-sulfonyl)-ethylamin | blaustichig rot |
| 38 | 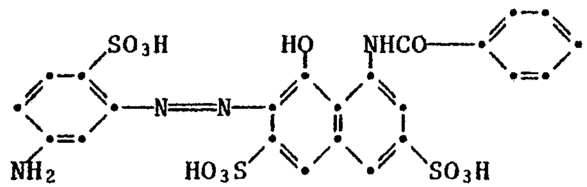 | β-(β-Sulfatoethyl-sulfonyl)-ethylamin | blaustichig rot |
| 39 | 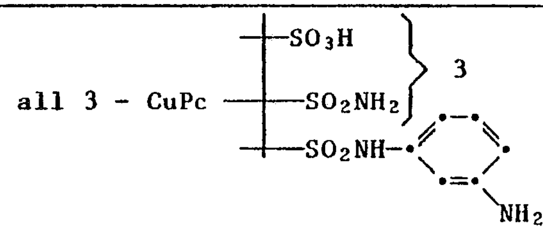 | β-(β-Sulfatoethyl-sulfonyl)-ethylamin | türkis |
| 40 | 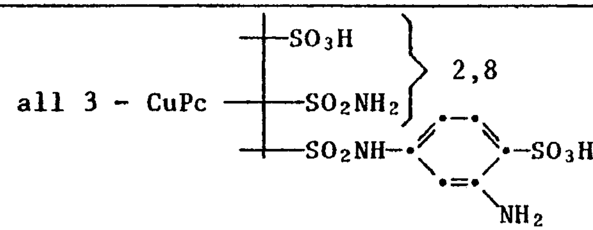 | β-(β-Sulfatoethyl-sulfonyl)-ethylamin | türkis |

| Beispiel Nr. | Farbstoff | Amin | Nuance auf Baumwolle |
|---|---|---|---|
| 41 | 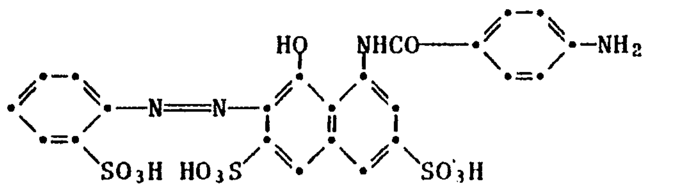 | β-(β-Acetoxyethyl sulfonyl)-ethylamin | rot |
| 42 | 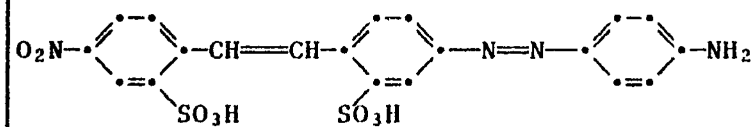 | β-(β-Acetoxyethyl-sulfonyl)-ethylamin | gelb |
| 43 | 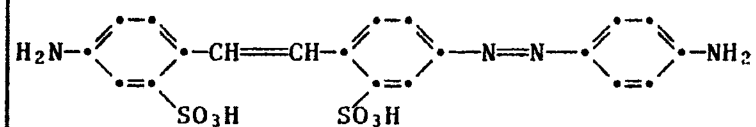 | β-(β-Chlorethyl-sulfonyl)-ethylamin | gelb |
| 44 | 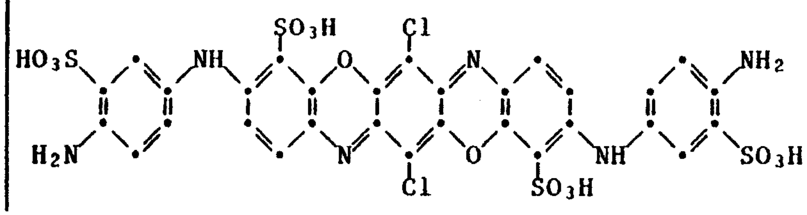 | β-(β-Sulfatoethyl-sulfonyl)-ethylamin | blau |

| Beisp. Nr. | Farbstoff | Amin | Nuance auf Baumwolle |
|---|---|---|---|
| 45 | 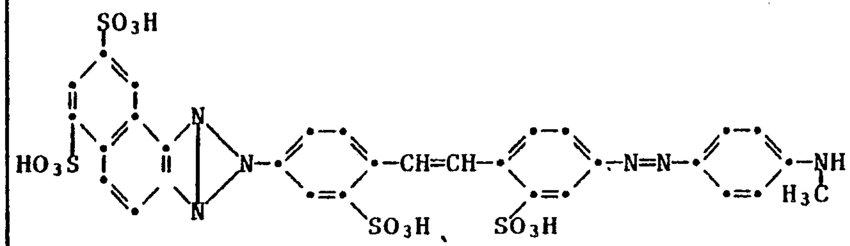 | β-(β-Chlorethyl-sulfonyl)-ethylamin | gelb |
| 46 | 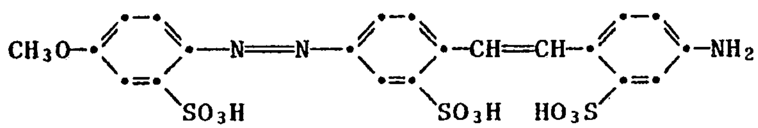 | 1-Aminobenzol-4-β-sulfatoethylsulfon | gelb |
| 47 | 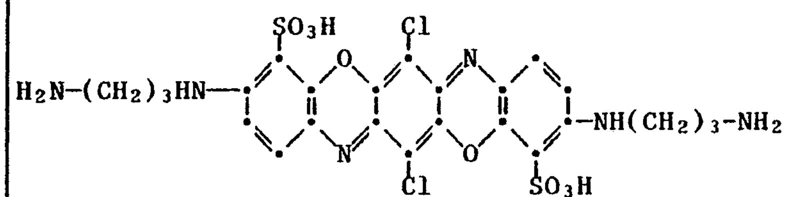 | 1-Aminobenzol-4-β-sulfatoethylsulfon | blau |
| 48 | 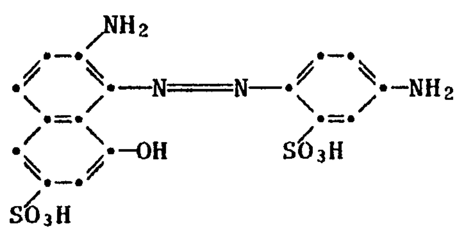 | β-(β-Sulfatoethyl-sulfonyl)-ethylamin | blaustichig rot |

| Beisp. Nr. | Farbstoff | Amin | Nuance auf Baumwolle |
|---|---|---|---|
| 49 | 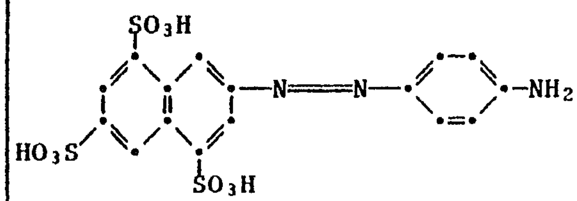 | β-(β-Sulfatoethyl-sulfonyl)-ethylamin | gelb |
| 50 | 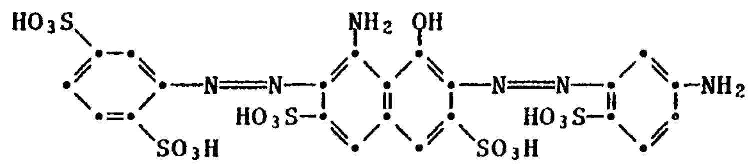 | β-(β-Chlorethyl-sulfonyl)-ethylamin | marine blau |
| 51 | 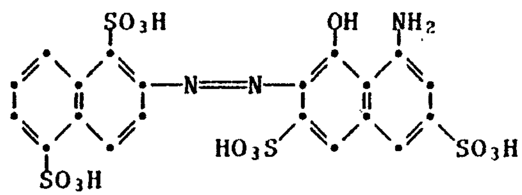 | Bis-[β-(β-chlor-ethylsulfonyl)ethyl]-amin | blaustichig rot |
| 52 | 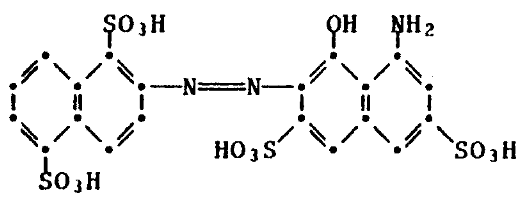 | 1-Aminobenzol-3-β-sulfatoethylsulfon | blaustichig rot |

| Beisp. Nr. | Farbstoff | Amin | Nuance auf Baumwolle |
|---|---|---|---|
| 53 | 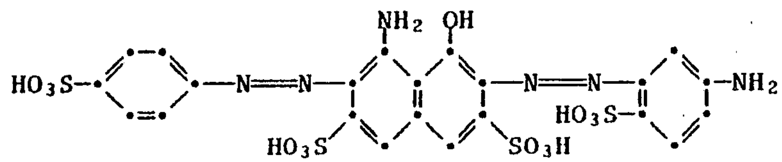 | 1-Aminobenzol-3-β-sulfatoethylsulfon | marine blau |
| 54 | 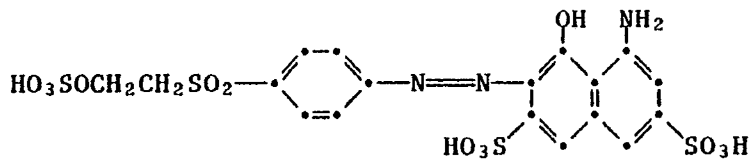 | β-(β-Chlorethyl-sulfonyl)ethylamin | blaustichig rot |
| 55 | 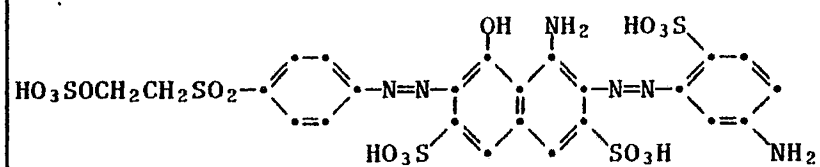 | β-(β-Chlorethyl-sulfonyl)ethylamin | marineblau |
| 56 | 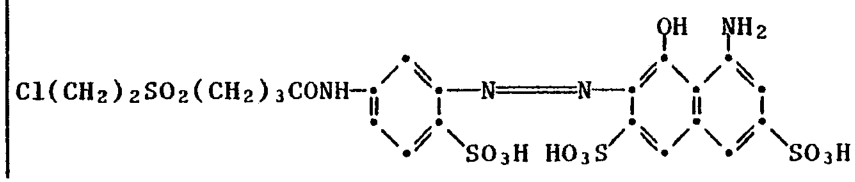 | β-(β-Chlorethyl-sulfonyl)ethylamin | rot |

| Beisp. Nr. | Farbstoff | Amin | Nuance auf Baumwolle |
|---|---|---|---|
| 57 | 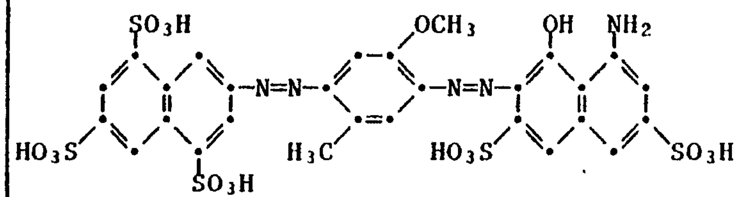 | 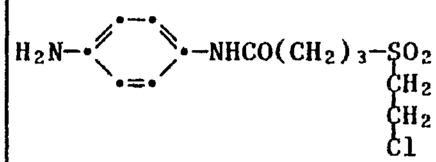 | blau |
| 58 | 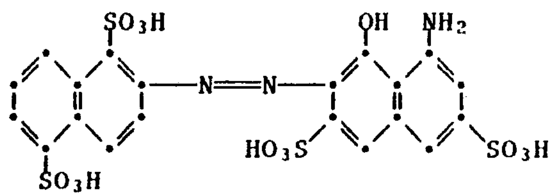 | N-[2-β-Chlorethylsulfonyl-ethyl]-ethylendiamin | rot |
| 59 | 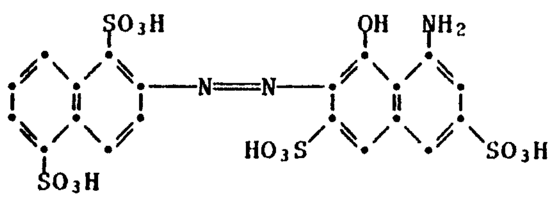 | 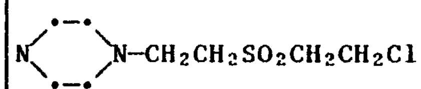 | rot |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40° C mit 100 Teilen eines Baumwollgewebes ein. Nach 45 Minuten werden 100 Teile einer Lösung, die pro Liter 16 g Natriumhydroxid und 20 g kalzinierte Soda enthält, zugegeben. Die Temperatur des Färbebades wird weitere 45 Minuten bei 40° C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst, dazu gibt man 1500 Teile einer Lösung, die pro Liter 53 g Natriumchlorid enthält. In dieses Färbebad geht man bei 35° C mit 100 Teilen eines Baumwollgewebes ein. Nach 20 Minuten werden 100 Teile einer Lösung, die pro Liter 16 g Natriumhydroxid und 20 g kalzinierte Soda enthält, zugegeben. Die Temperatur des Färbebades wird weitere 15 Minuten bei 35° C gehalten. Danach wird die Temperatur innerhalb von 20 Minuten auf 60° C erhöht. Die Temperatur wird weitere 35 Minuten bei 60° C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst, dazu gibt man 1400 Teile einer Lösung, die pro Liter 100 g Natriumsulfat enthält. In dieses Färbebad geht man bei 25° C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60° C erhöht. Die Temperatur wird weitere 90 Minuten auf 60° C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxid und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas (38° Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann

imprägniert man das Gewebe mit einer 20°C warmen Lösung, die pro Liter 4 g Natriumhydroxid und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochen geseift und nochmals gespült, und anschliessend getrocknet.

**Ansprüche**

1. Reaktivfarbstoffe der Formel

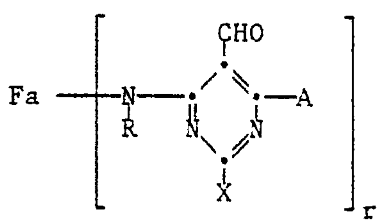

(1),

worin Fa der Rest eines organischen Farbstoffes der Monoazo- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon-oder Perylentetracarbimid-Reihe ist,
X ein abspaltbarer Substituent ist,
r die Zahl 1 oder 2 bedeutet,
R für Wasserstoff oder gegebenenfalls durch nichtreaktive Reste substituiertes $C_1$-$C_4$-Alkyl steht, und
A ein Rest der Formel

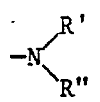

(2) ist,

worin R′ Wasserstoff, unsubstituiertes oder durch einen oder mehrere nichtreaktive Reste substituiertes $C_1$-$C_4$-Alkyl, $C_5$-$C_6$-Cycloalkyl, unsubstituiertes oder durch einen oder mehrere nichtreaktive Reste substituiertes Aryl oder einen Reaktivrest der Formel

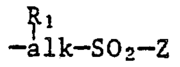 (3),

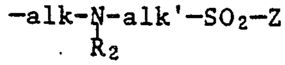 (3a),

$-arylen-SO_2-Z$ (3b) oder

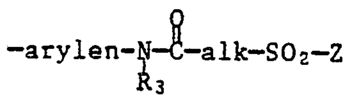 (3c)

bedeutet; alk und alk′ unabhängig voneinander einen $C_1$-$C_6$-Alkylenrest darstellen, arylen ein gegebenenfalls substituierter Arylenrest ist, $R_1$ für Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder für die Gruppe $-SO_2-Z$ steht, $R_2$ Wasserstoff oder $C_1$-$C_4$-Alkyl ist, $R_3$ Wasserstoff oder unsubstituiertes oder durch Hydroxy, Sulfo, Sulfato, Carboxy oder Cyano substituiertes $C_1$-$C_4$-Alkyl bedeutet, Z für $-CH=CH_2$ oder $-CH_2-CH_2-Y$ steht und Y eine Abgangsgruppe ist;
R″ unabhängig die Bedeutung von R hat oder einen Reaktivrest der oben angegebenen Formel (3) darstellt; oder R′ und R″ zusammen mit dem N-Atom einen Rest der Formel

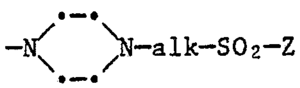 (2a),

worin alk und Z die oben angegebene Bedeutung haben, bilden.

2. Reaktivfarbstoffe gemäss Anspruch 1, dadurch gekenzeichnet, dass r = 1 ist.

3. Reaktivfarbstoffe gemäss Anspruch 1 oder 2, dadurch gekennzeichnet, dass der abspaltbare Substituent X Chlor oder Fluor ist.

4. Reaktivfarbstoffe gemäss einem der Ansprüche 1 bis 3, dadurch gekennzeichnet, dass R Wasserstoff, Methyl oder Ethyl ist.

5. Reaktivfarbstoffe gemäss einem der Ansprüche 1 bis 4, dadurch gekennzeichnet, dass Fa unsubstituiert oder durch $C_1$-$C_4$-Alkyl, $C_1$-$C_4$-Alkoxy, $C_1$-$C_4$-Alkanoylamino, Benzoylamino, Amino, unsubstituiertes oder im Alkylteil durch -OH, $-OCOCH_3$, $-OSO_3H$, -CN oder Halogen substituiertes N-Mono- oder N,N-Di-$C_1$-$C_4$-Alkylamino, Phenylamino, Mono- oder Di-Sulfobenzylamino, $C_1$-$C_4$-Alkoxycarbonyl, $C_1$-$C_4$-Alkylsulfonyl, Trifluormethyl, Nitro, Cyano, Halogen, Carbamoyl, N-Mono- oder N,N-Di-$C_1$-$C_4$-Alkylcarba moyl, Sulfamoyl, N-Mono-oder N,N-Di-$C_1$-$C_4$-Alkylsulfamoyl, N-Mono- oder N,N-Di-($\beta$-Hydroxyethyl)-sulfamoyl, N-Phenylsulfamoyl, Hydroxy, Carboxy, Sulfo, Sulfomethyl und/oder Ureido substituiert ist.

6. Reaktivfarbstoffe gemäss einem der Ansprüche 1 bis 5, dadurch gekennzeichnet, dass Fa für den Rest eines organischen Farbstoffes der Mono- oder Polyazo-, Metallkomplexazo-, Anthrachinon-, Phthalocyanin-, Formazan- oder Dioxazinreihe, welcher durch einen oder mehrere der im Anspruch 5 genannten Reste substituiert ist, steht.

7. Reaktivfarbstoffe gemäss einem der Ansprüche 1 bis 6, dadurch gekennzeichnet, dass Fa für den Rest eines Mono- oder Disazofarbstoffes, welcher durch einen oder mehrere Reste, ausgewählt aus der Gruppe Methyl, Ethyl, Methoxy, Ethoxy, Acetylamino, Benzoylamino, Amino, Chlor, Brom, Ureido, Hydroxy, Carboxy, Sulfomethyl und Sulfo, substituiert ist, steht.

8. Reaktivfarbstoffe gemäss einem der Ansprüche 1 bis 7, dadurch gekennzeichnet, dass R′ unsubstituiertes oder durch Hydroxy, Carboxy, Sulfo oder Sulfato substituiertes $C_1$-$C_4$-Alkyl, unsubstituiertes oder durch Methyl, Ethyl, Methoxy, Ethoxy, Carboxy, Sulfo und/oder Chlor substituiertes Phenyl oder einen Rest der Formel

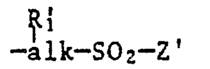 (3'),

$-alk-NH-alk'-SO_2-Z'$ (3a'),

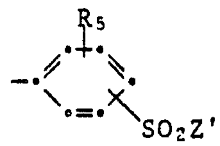 (3b')

oder

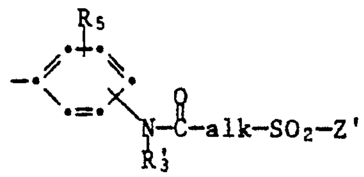 (3c'),

worin alk und alk′ unabhängig voneinander einen $C_1$-$C_4$-Alkylenrest bedeuten, $R_1'$ Wasserstoff oder die Gruppe $-SO_2-Z'$ ist, Z′ $-CH=CH_2$ oder $-CH_2-CH_2-Y'$ bedeutet, Y′ -Cl, $-OSO_3H$, $-SSO_3H$, $-OCOCH_3$, $-OCO-C_6H_5$ oder $-OPO_3H_2$ ist, $R_5$ für Wasserstoff, Sulfo, Carboxy, Chlor, Methoxy oder Methyl steht und $R_3'$ Wasserstoff oder $C_1$-$C_4$-Alkly ist, bedeutet.

9. Reaktivfarbstoffe gemäss einem der Ansprüche 1 bis 8, dadurch gekennzeichnet, dass R″ Wasserstoff, Methyl, Ethyl oder ein Rest der Formel

$-alk-SO_2-Z'$
(3″),

worin alk und Z′ die im Anspruch 8 angegebene Bedeutung haben, ist.

10. Reaktivfarbstoffe gemäss einem der Ansprüche 1 bis 9, dadurch gekennzeichnet, dass A ein Rest der Formel

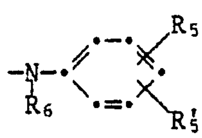 (4),

worin $R_6$ Wasserstoff, Methyl oder Ethyl und $R_5$ Wasserstoff, Sulfo, Carboxy, Chlor, Methoxy oder Methyl ist und $R_5'$ unabhängig die Bedeutung von $R_5$ hat, oder ein Rest der Formel

$-NH-CH_2-CH_2-SO_2-Z''$ (3*),

$-NH-CH_2-CH_2-NH-CH_2-CH_2-SO_2-Z''$ (3a″),

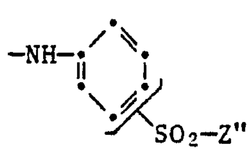 (3b″)

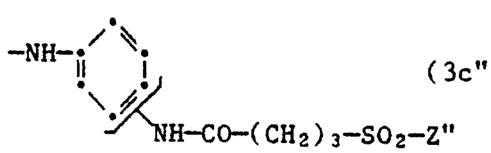 (3c″) ,

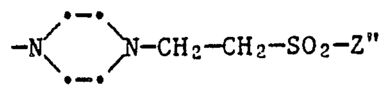

(2a'),

oder

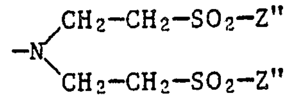

(5)

worin Z″ jeweils $-CH=CH_2$, $-CH_2-CH_2-Cl$ oder $-CH_2-CH_2-OSO_3H$ bedeutet, ist.

11. Reaktivfarbstoffe der Formel (1) gemäss Anspruch 1, worin Fa für den Rest eines organischen Farbstoffes der Mono- oder Polyazo-, Metallkomplexazo-, Anthrachinon-, Phthalocyanin-, Formazan- oder Dioxazinreihe, welcher eine oder mehrere Sulfogruppen trägt und gegebenenfalls durch einen oder mehrere der im Anspruch 5 genannten Reste weitersubstituiert ist, steht, R Wasserstoff oder einen unsubstituierten oder durch Halogen, Hydroxy, Cyano, Carboxy, Sulfo, Sulfato, $C_1$-$C_4$-Alkoxycarbonyl, $C^1$1-$C_4$-Alkoxy oder Phenyl substituierten $C_1$-$C_4$-Alkylrest darstellt, X Chlor oder Fluor und r 1 bedeutet und A ein Rest der im Anspruch 1 angegebenen Formel (2), worin R′ unsubstituiertes oder durch Hydroxy, Carboxy, Sulfo oder Sulfato substituiertes $C_1$-$C_4$-Alkyl, unsubstituiertes oder durch Methyl, Ethyl, Methoxy, Ethoxy, Carboxy, Sulfo oder Chlor substituiertes Phenyl oder einen Rest der im Anspruch 8 angegebenen Formeln (3′), (3a′), (3b′) oder (3c′) bedeutet und R″ für Wasserstoff, $C_1$-$C_4$-Alkyl oder einen Rest der im Anspruch 8 angegebenen Formel (3′) steht, oder R′ und R″ zusammen mit dem N-Atom einen Rest der im Anspruch 1 angegebenen Formel (2a) darstellen, ist.

12. Reaktivfarbstoffe der Formel (1) gemäss Anspruch 1, worin Fa der Rest eines organischen Farbstoffes der Monoazo-, Polyazo- oder Metallkomplexazoreihe, welcher eine oder mehrere Sulfogruppen trägt und gegebenenfalls durch einen oder mehrere der im Anspruch 5 genannten Substituenten weitersubstituiert ist, R für Wasserstoff, Methyl oder Ethyl steht, X Chlor und r 1 ist und A einen Rest der im Anspruch 10 angegebenen Formel (2a′), (3*), (3a″), (3b″), (3c″), (4) oder (5) bedeutet.

13. Reaktivfarbstoffe gemäss Anspruch 1 der formel

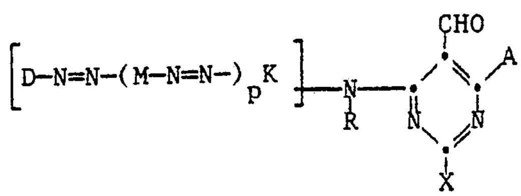

(6)

oder

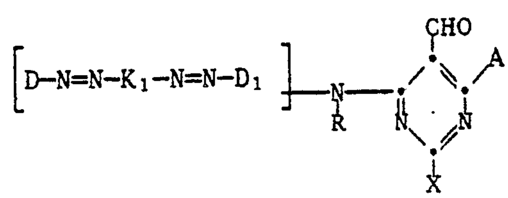

(7),

worin R, A und X die im Anspruch 1 angegebene bedeutung haben, D und $D_1$ unabhängig voneinander eine Diazokomponente der Benzol- oder Naphthalinreihe darstellen, M eine Mittelkomponente der Benzol oder Naphthalinreihe ist, K für eine Kupplungskomponente der Benzol- oder Naphthalinreihe oder der heterocyclischen Reihe steht, $K_1$ der Rest einer Kupplungskomponente der Aminonaphtholsulfonsäure-Reihe ist und p 0 oder 1 bedeutet.

14. Reaktivfarbstoffe gemäss Anspruch 1, dadurch gekennzeichnet, dass es sich um Metallkomplexe von Mono- oder Disazofarbstoffen der im Anspruch 13 angegebenen Formeln (6) oder (7) handelt.

15. Reaktivfarbstoffe gemäss Anspruch 1 der Formel

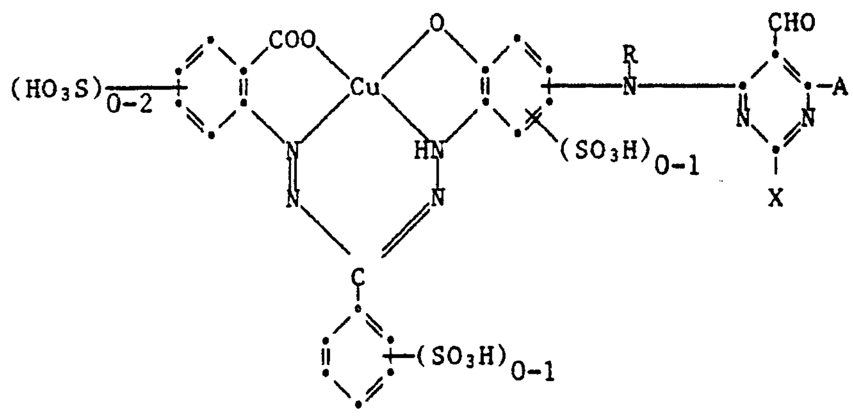

(9),

worin R, A und X die im Anspruch 1 angegebene Bedeutung haben.

16. Verfahren zur Herstellung von Reaktivfarbstoffen der Formel (1), dadurch gekennzeichnet, dass man organische Farbstoffe der Formel

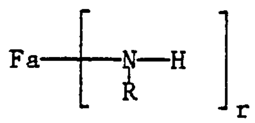

(12)

oder Farbstoffvorprodukte, mindestens ein Aequivalent eines Pyrimidins der Formel

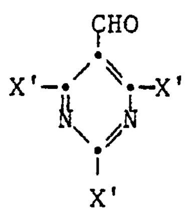

(13)

und mindestens ein Aequivalent eines Amins der Formel

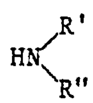

(2')

in beliebiger Reihenfolge zu einem Reaktivfarbstoff der Formel (1) kondensiert, wobei Fa, R, R', R'' und r jeweils die zuvor angegebene Bedeutung haben und X' jeweils die Bedeutung von X als ein als Anion abspaltbarer Substituent hat, und dass man im Falle der Verwendung von Farbstoffvorprodukten diese in die gewünschten Endfarbstoffe umwandelt.

17. Verwendung der Reaktivfarbstoffe gemäss Anspruch 1 zum Färben und Bedrucken von cellulosehaltigen Fasermaterialien.

18. Verwendung gemäss Anspruch 17 zum Färben und Bedrucken von Baumwolle.